# EUROPÄISCHE PATENTSCHRIFT

(11) **EP 3 278 956 B1**
(45) Veröffentlichungstag und Bekanntmachung des Hinweises auf die Patenterteilung: **01.05.2019**
(21) Anmeldenummer: 16182632.6
(22) Anmeldetag: 03.08.2016
(51) Int. Cl.: B29C 65/00, B32B 37/04

(54) **VERFAHREN ZUR HERSTELLUNG VON ZUMINDEST ZWEILAGIGEN PLATTEN AUS EINEM MATERIAL MIT NIEDRIGEM MITTLEREM ZELLDURCHMESSER**
METHOD FOR PRODUCING AT LEAST TWO-LAYER PLATES OF A MATERIAL WITH LOW AVERAGE CELL DIAMETER
PROCEDE DE FABRICATION DE PLAQUES D'AU MOINS DEUX COUCHES CONSTITUEES D'UN MATERIAU AYANT UN FAIBLE DIAMETRE MOYEN D'ALVEOLE

(43) Veröffentlichungstag der Anmeldung: 07.02.2018
(73) Patentinhaber: BASF SE, 67056 Ludwigshafen am Rhein (DE)
(72) Erfinder: Merkel, Peter, 67308 Zellertall (DE); Diehlmann, Tim, 67283 Obrigheim-Colgenstein (DE); Kiciak, Thomas, 67071 Ludwigshafen (DE); Dietzen, Franz-Josef, 67454 Hassloch (DE); Hahn, Christoph Oliver, 67454 Hassloch (DE)

(56) Entgegenhaltungen:
- EP-A1- 2 923 835
- EP-A2- 0 231 013
- WO-A1-2012/098040
- DE-A1- 4 421 016

## Beschreibung

Die vorliegende Erfindung betrifft ein Verfahren zur Herstellung von zumindest zweilagigen Platten durch Verbinden von mindestens einer dünneren thermoplastischen Schaumstoffplatte (TS) und mindestens einer dünneren Platte (PA) als Ausgangsplatten. Die dünnere Platte (PA) ist aus einem Material hergestellt, das einen mittleren Zelldurchmesser ≤ 1000 nm aufweist, vorzugsweise aus mindestens einem Aerogel und/oder Xerogel, insbesondere aus mindestens einem Aerogel. Weiterhin betrifft die vorliegende Erfindung die zumindest zweilagige Platte als solche sowie deren Verwendung zur Wärmedämmung.

Die Anzahl der Lagen der zumindest zweilagigen Platte als solche ergibt sich aus der Anzahl der dünneren Platten (PA) und (TS), die miteinander verbunden, vorzugsweise thermisch miteinander verschweißt, werden. Wenn beispielsweise drei dünnere Ausgangsplatten (PA) und (TS) miteinander verbunden werden, wird eine dreilagige Platte als solche erhalten, im Fall von vier dünneren Ausgangsplatten ergibt sich demzufolge eine vierlagige Platte als solche.

EP-A 1 318 164 betrifft ein Verfahren zur Herstellung von dicken extrudierten Polystyrol-Schaumstoffplatten (XPS-Platten) durch Verbinden zweier oder mehrerer dünner Platten. Die dicken Platten werden erhalten, indem die dünnen Platten an den Flächen, an denen sie verbunden werden sollen, mit einem organischen Lösungsmittel für Polystyrol gleichmäßig benetzt werden. Dadurch wird die Schaumstoffoberfläche angelöst und die Platten können anschließend miteinander verpresst werden. Als Lösungsmittel eignen sich beispielsweise Kohlenwasserstoffe, Alkohole oder Ether, die einen Siedepunkt zwischen 50 und 250 °C aufweisen. Weiterhin können in dem Verfahren gemäß EP-A 1 318 164 die Schäumhäute an den Hauptflächen der miteinander zu verbindenden Platten geschält werden, bevor sie mit dem Lösungsmittel benetzt werden.

EP-A 1 213 119 offenbart ein Verfahren zur Verbindung von mindestens zwei Ausgangsplatten aus thermoplastischem Kunststoffschaum zu einer neuen Platte, wobei die Ausgangsplatten an den Berührungsflächen extrusionshautlos sind und die Verbindung der Ausgangsplatten durch Quellschweißen erfolgt. Zum Quellschweißen werden organische Lösungsmittel eingesetzt, die einen Siedepunkt < 150°C aufweisen, beispielsweise Aceton oder Gemische von organischen Lösungsmitteln mit Wasser.

Extrudierte Kunststoffschaumplatten von großer Dicke werden in DE-A 101 06341 offenbart. Mit dem darin beschriebenen Verfahren zur Verbindung von mindestens zwei Ausgangplatten aus Kunststoffschaum zu einer neuen Platte können Platten mit einer Mindestdicke von 70 mm hergestellt werden. Vorzugsweise handelt es sich dabei um fluorchlorkohlenwasserstofffreie Polystyrol-Schaumplatten. In dem Verfahren werden die Ausgangsplatten, die an der Berührungsfläche extrusionshautlos sind, miteinander verbunden, indem ein diffusionsoffener Kleber oder mechanische Verbindungselemente verwendet werden. Das Verfahren kann alternativ auch so durchgeführt werden, dass bei teilflächiger Verbindung und stellenweiser Verschweißung oder stellenweiser Verklebung ein nicht diffusionsfähiger Kleber oder nur ein gering diffusionsfähiger Kleber verwendet werden. Als Polystyrol-Schaumplatten eignen sich insbesondere XPS-Platten. In DE-A 101 06341 sind jedoch keine Angaben enthalten, wie anstelle einer Verklebung die Verschweißung der Ausgangsplatten konkret durchgeführt werden kann.

DE-A 44 21 016 offenbart ein Verfahren zur Herstellung von CO₂ -geschäumten Kunststoffplatten großer Dicke, insbesondere aus Polystyrol und/oder Polyethylen, wobei eine Doppelung der entsprechenden Ausgangsplatten durch thermisches Verschweißen erfolgt. Das thermische Verschweißen wird mit Hilfe eines Heizschwertes durchgeführt, wodurch die Oberflächen der eingesetzten Kunststoffschaumplatten angeschmolzen werden. Die zu verschweißenden Ausgangsplatten werden über das Heizschwert gezogen, wobei es zu einem direkten Kontakt von Heizschwert und Ausgangsplatten kommt. Das vorzugsweise mit einer Teflonschicht versehene Heizschwert kann elektrisch oder mit einem durchfließenden Heizmedium auf die notwendige Schweißtemperatur gebracht werden, die je nach Kunststoffschaum zwischen 100 und 150 °C beträgt.

Thermische Dämmstoffe aus XPS-Kompositmaterialien, die dreilagig sind, werden in WO 2012/016991 beschrieben. Die Dreilagigkeit der Kompositmaterialien ergibt sich dadurch, dass eine untere, eine zentrale und eine obere XPS-Platte zu dem XPS-Kompositmaterial vereinigt werden, wobei jede nach außen gerichtete Seite dieses XPS-Kompositmaterials eine Extrusionshaut umfasst. Während die Kontaktseiten der zentralen XPS-Platte ebenfalls eine Extrusionshaut aufweisen, wird diese bei den entsprechenden Kontaktseiten der oberen sowie unteren XPS-Platte entfernt. Die einzelnen XPS-Platten werden zum XPS-Kompositmaterial durch thermisches Verschweißen an den Kontaktflächen zusammengefügt. Das thermische Verschweißen wird bevorzugt unter Verwendung eines Heizschwertes sowie mit direktem Kontakt vom Heizschwert mit den zu verschweißenden XPS-Platten durch Bewegung der XPS-Platten über ein starr angeordnetes Heizschwert durchgeführt. Die zwischen den einzelnen XPS-Platten ausgebildete Schweißnaht kann Teilbereiche von unterschiedlicher Intensität aufweisen, was bedeutet, dass die entsprechende Schweißnaht an einigen Stellen stärker, an anderen Stellen hingegen schwächer ausgebildet ist.

DE-A 10 2012 204 822 betrifft ein Verfahren zum dauerhaften flächigen Verbinden von zwei Werkstoffplatten von zwei aufgeschäumten Materialien. Eine erste und eine zweite Werkstoffplatte werden jeweils mit einer Fördereinrichtung in der gewünschten Orientierung und Deckung passgenau übereinander positioniert, einer Schweißstation zugeführt und dort entlang eines Trennschwertes bewegt. Durch die Positionierung des Trennschwertes zwischen den einander zugewandten Oberflächen der beiden Werkstoffplatten wird ein Spalt mit definierter Spaltbreite erzeugt. Durch ein sich im Spaltstrom abwärts zum Trennschwert befindendes fest installiertes Wärmeelement, vorzugsweise ein Heizschwert, werden durch berührungsfreie Wärmeübertragung die einander zugewandten Oberflächen der beiden Werkstoffplatten mit Wärme beaufschlagt, so dass mindestens eine dieser Oberflächen erweicht wird oder anschmilzt. Anschließend werden die beiden Werkstoffplatten durch Andrückelemente zusammengefügt, die die beiden Werkstoffplatten derart gegeneinander drücken, dass deren einander zugewandte Oberflächen aufgrund der vorangegangenen Wärmebeaufschlagung durch das Wärmeelement stoffschlüssig miteinander verbunden werden. Ein ähnliches Verfahren ist auch aus EP-A-2 923 835 bekannt.

WO 2015/011016 betrifft ein Verfahren zur Herstellung von zumindest zweilagigen thermoplastischen Schaumstoffplatten durch thermisches Verschweißen von mindestens zwei dünneren thermoplastischen Schaumstoffplatten. Bei diesem Verfahren werden mindestens zwei Heizelemente auf zueinander versetzten Ebenen zwischen die zu verschweißenden Oberflächen der dünneren thermoplastischen Schaumstoffplatten geführt, wobei sich die Schaumstoffplatten und die Heizelemente nicht gegenseitig berühren. Dabei werden entweder zwei Heizelemente aus jeweils zueinander entgegengesetzten Richtungen in den Zwischenraum zwischen die beiden Ausgangsplatten eingeführt und/oder die zwei Heizelemente werden in jeweils zueinander entgegengesetzten Richtungen aus diesem Zwischenraum wieder entfernt. Die internationale Anmeldung PCT/EP2015/080180 betrifft ein Verfahren zur Herstellung von zumindest zweilagigen thermoplastischen Platten durch thermisches Verschweißen von zumindest einer ersten dünneren thermoplastischen Platte mit einer Dichte (D1) und zumindest einer zweiten dünneren thermoplastischen Platte mit einer Dichte (D2), wobei die Dichte (D1) der ersten dünneren thermoplastischen Platte kleiner ist als die Dichte (D2) der zweiten dünneren thermoplastischen Platte. Bei dem Verfahren werden zumindest ein erstes Heizelement und zumindest ein zweites Heizelement auf zueinander versetzten Ebenen zwischen die beiden dünneren thermoplastischen Platten eingeführt, wobei sich die Oberflächen der dünneren thermoplastischen Platten die Oberflächen der Heizelemente nicht berühren. Das erste Heizelement überträgt eine Energiemenge (E1) auf die Oberfläche der ersten dünneren thermoplastischen Platte und das zweite Heizelement eine Energiemenge (E2) auf die Oberfläche der zweiten dünneren thermoplastischen Platte, wobei die Energiemenge (E1) kleiner ist als die Energiemenge (E2).

EP-A 1 201 838 betrifft eine Dämmplatte für die Wärmeisolierung von Gebäudefassaden. Die zumindest zweischichtige Dämmplatte weist eine erste relativ dünne Materialschicht aus expandiertem Polystyrol auf, wobei im Fall einer dreischichtigen Dämmplatte auch die dritte Schicht der ersten Schicht entspricht, die folglich als Außenflächen der Dämmplatte verwendet werden. Die zweite Schicht der Dämmplatte hat hingegen eine Dicke, die einem Vielfachen der Dicke der ersten und gegebenenfalls der dritten Schicht entspricht, wobei die zweite Schicht aus einem Polyurethanschaum besteht. In EP-A 1 201 838 sind hingegen keine Angaben enthalten, ob es sich bei den jeweiligen Ausgangsplatten der mehrschichtigen Dämmplatte um Platten auf Basis von Aerogelen handelt. Die jeweiligen Dämmplatten werden aus den entsprechenden Ausgangsplatten beim Herstellungsprozess in situ miteinander verbunden, wobei die auf das Polyurethan basierende Schicht gleichzeitig als Klebeschicht fungiert. Ein Verkleben oder insbesondere Verschweißen von bereits fertigen Ausgangsplatten ist in EP-A 1 201 838 ebenfalls nicht beschrieben.

CH-A 706 454 betrifft eine Dämmplatte und ein Verfahren zur Herstellung einer Dämmplatte. Die Dämmplatte wird zur Wärmeisolation von Außenfassaden, Wänden oder anderen Teilen von Gebäuden verwendet und basiert auf expandiertem Polystyrol (EPS). Die Dämmplatte kann mehrteilig sein und umfasst eine EPS-Hauptplatte und zumindest eine Deckplatte, die auf der Vorder- oder Rückseite der Hauptplatte angeordnet ist. Die Hauptplatte ist in Folge athermaner Bestandteile, insbesondere Graphitpartikel, dunkel gefärbt, während die entsprechende Deckplatte, die ebenfalls auf EPS basiert, hell bis weiß erscheint, was durch die Zugabe anderer atherman wirkender Stoffe, insbesondere Titandioxid, erzielt wird. Die einzelnen Ausgangsplatten der Dämmplatte können auf beliebige Weise miteinander verbunden werden, beispielsweise durch thermisches Verschweißen, durch Quellschweißen (unter Verwendung eines Lösungsmittels) oder unter Verwendung eines Klebstoffs. In CH-A 706 454 wird jedoch nicht offenbart, dass außer auf expandiertem Polystyrol (EPS) basierten Ausgangsplatten auch andere Ausgangsplatten verwendet werden können.

EP-B 2 665 876 betrifft eine isolierte Gebäudewand umfassend ein Wärmedämmverbundsystem und eine Gebäudeaußenwand, wobei das Wärmedämmverbundsystem an der bauwerksfernen Seite der Gebäudewand angebracht ist. Das Wärmeverbundsystem umfasst eine zumindest zweilagige Wärmedämmschicht, wobei mindestens zwei Lagen dieser Wärmedämmschicht jeweils ein Aerogel und anorganische Fasern sowie gegebenenfalls anorganische Füllstoffe enthalten. Die einzelnen Lagen der Wärmedämmschicht sind mit einem anorganischen Bindemittel, wie Kaliumwasserglas oder Zement, miteinander verbunden und das Wärmedämmverbundsystem weist einen Brennwert von weniger als 3 MJ pro kg auf. Bei dem Aerogel kann es sich um anorganische Aerogele auf der Basis von Siliciumoxiden (Silicaten) handeln.

WO 2010/046074 betrifft Isolierwände umfassend ein externes thermisches Isolationszusammensetzungssystem (ETICS), das auf eine Wand aufgebracht ist. Das ETICS ist wiederum aus mehreren Lagen/Schichten als Isolieruntersystem aufgebaut, wobei mindestens eine dieser Schichten eine Isolierplatte aufweist, die auf einem Aerogel basiert. Bei dem Aerogel kann es sich um anorganisches oder organisches Aerogel handeln.

EP-A 2 597 072 betrifft einen Dämmstoff zur Herstellung eines Dämmelements sowie ein aus einem solchen Dämmstoff hergestelltes Dämmelement, wobei der Dämmstoff Aerogel-Partikel und wenigstens ein anorganisches und/oder organisches Bindemittel enthält. Der Bindemittelanteil ist dabei < 3 Vol.-%, bezogen auf das Gesamtvolumen des Dämmstoffs. Weiterhin kann der Dämmstoff expandierte und/oder extrudierte Styrolpolymerisat-Partikel enthalten. Die Aerogel-Partikel sind in den Beispielen als anorganische Aerogel-Partikel auf Silicabasis präzisiert. Bei den Bindemitteln kann es sich beispielsweise um Polyurethane handeln. Das aus dem Dämmstoff resultierende Dämmelement eignet sich zur Schall- und/oder Wärmedämmung von Gebäudewänden und kann gegebenenfalls mehrere Schichten des Dämmstoffs umfassen. Einzelne Schichten können dabei auch weitgehend frei von Aerogel-Partikeln sein. Die Herstellung des Dämmelements erfolgt durch homogenes Mischen der einzelnen Komponenten des Dämmstoffs und beispielsweise nachfolgendem Aushärten unter Druck in einer Form. Sofern mehrschichtige Dämmelemente hergestellt werden sollen, werden die entsprechenden Dämmstoffmischungen schichtweise in die entsprechende Form gebracht. Dort findet ein gleichzeitiges Aushärten der einzelnen Dämmstoffgemische statt. Nachteilig an diesem Verfahren ist insbesondere, dass die einzelnen Schichten aufgrund des Herstellungsverfahrens nicht sauber voneinander getrennt werden können. Das Verbinden, insbesondere das thermische Verschweißen von dünneren Ausgangsplatten unter Erhalt einer zunächst zweilagigen Platte, ist in EP-A 2 597 072 nicht offenbart und zudem mit diesem Verfahren auch nicht möglich.

WO 2012/000917 betrifft ein Verfahren zur Herstellung von porösen Materialien auf Basis von Polyharnstoff durch Umsetzung mindestens eines mehrfunktionellen Isocyanats mit einer Aminkomponente, welche mindestens ein mehrfunktionelles substituiertes aromatisches Amin umfasst, sowie Wasser in Gegenwart eines Lösungsmittels. Die porösen Materialien können in Abhängigkeit von den bei der Herstellung gewählten Verfahrensbedingungen als organische Xerogele (Herstellung unter subkritischen Bedingungen) oder als organische Aerogele (Herstellung unter überkritischen Bedingungen) vorliegen. Die porösen Materialien eignen sich zur Verwendung als Dämmstoff sowie zur Herstellung von Vakuumisolationspaneelen.

Im Stand der Technik ist somit nirgendwo offenbart, dass auch zumindest zweilagige Platten hergestellt werden können, die einerseits aus mindestens einer dünneren thermoplastischen Schaumstoffplatte und andererseits auf einer dünneren Platte, mit einem niedrigen Zelldurchmesser, die vorzugsweise auf einem anorganischen oder organischen Aerogel bzw. Xerogel basiert, hergestellt werden können.

Die der vorliegenden Erfindung zugrunde liegende Aufgabe besteht in der Bereitstellung eines neuen Verfahrens zur Herstellung von zumindest zweilagigen Platten bzw. in den zumindest zweilagigen Platten als solchen.

Gelöst wird die Aufgabe durch ein Verfahren zur Herstellung einer zumindest zweilagigen Platte durch Verbinden von mindestens einer dünneren thermoplastischen Schaumstoffplatte (TS) und mindestens einer dünneren Platte (PA), wobei die dünnere Platte (PA) aus einem Material mit einem mittleren Zelldurchmesser ≤ 1000 nm hergestellt ist.

Die mit dem erfindungsgemäßen Verfahren hergestellten zumindest zweilagigen Platten zeichnen sich dadurch aus, dass die vorteilhaften Eigenschaften der einzelnen Ausgangsplatten miteinander kombiniert werden können, sodass zwei- oder mehrlagige Platten mit auf das jeweilige Anforderungsprofil maßgeschneiderten Materialeigenschaften bereitgestellt werden können.

Diese zwei- oder mehrlagigen Schaumstoffplatten zeichnen sich insbesondere durch niedrige Wärmeleitfähigkeit und/oder eine gute Verarbeitbarkeit aus.

So sind beispielsweise thermoplastische Schaumstoffplatten in der Regel zur Wärmeisolation/Wärmedämmung aufgrund ihrer höheren Wärmeleitfähigkeiten (höherer Wärmeleitfähigkeitswert λ) weniger gut geeignet als beispielsweise Platten basierend auf Aerogelen oder Xerogelen, die eine deutlich niedrigere Wärmeleitfähigkeit aufweisen.

Im Gegensatz dazu können thermoplastische Schaumstoffplatten, wie Polystyrolschaumstoffe, gut verarbeitet werden, wodurch deren Anwendung beispielsweise im Bauwesen sehr vorteilhaft ist, weil diese Platten über eine gute Anhaftung an Putz oder sonstigen Beschichtungen verfügen. Weiterhin sind solche thermoplastischen Schaumstoffplatten auch besonders unempfindlich gegen Beschädigungen, wodurch auch eine Stabilisierung der zumindest zweilagigen Schaumstoffplatte erzielt wird.

Im Gegensatz dazu ist die Anhaftung von Platten basierend auf einem Material mit einem sehr niedrigen mittleren Zelldurchmesser an Putz oder sonstigen Beschichtungen relativ schlecht. Weiterhin weisen diese Platte nur geringe Festigkeiten auf und sind zudem bruchempfindlich was ihre Verarbeitung schwierig macht. Die Wärmedämmungseigenschaften solcher vorzugsweise auf Aerogelen basierenden Platten (PA) sind hingegen deutlich besser als diejenigen der thermoplastischen Schaumstoffplatten.

Demzufolge können durch die vorliegende Erfindung auf einfache Weise zumindest zweilagige Platten bereitgestellt werden, die als Dämmmaterialien mit niedrigen Wärmeleitfähigkeiten eingesetzt werden können und die zudem über die von Standard-(thermoplastischen) Schaumstoffen bekannten Eigenschaften, wie gute Putzhaftung, mechanische Unempfindlichkeit, leichte Verarbeitbarkeit und/oder Verfügbarkeit in beliebigen Dicken verfügen.

Sofern die erfindungsgemäßen zumindest zweilagigen Platten durch thermisches Verschweißen hergestellt werden, ergeben sich darüber hinaus vorteilhafte Eigenschaften im Zusammenhang mit einer (verringerten) Brennbarkeit sowie dem Erfüllen von Brandtests.

Selbst wenn man berücksichtigt, dass die zu verschweißenden dünneren Platten nicht oder nur sehr schwer brennbar sind, gilt eine entsprechende Aussage nicht automatisch für das erhaltene Produkt, also die zwei- oder mehrlagigen Platten mit einer (gegenüber den eingesetzten dünneren Ausgangsplatten) größerer Dicke. Dieses unterschiedliche Brandverhalten ist in der Ausbildung der sogenannten Schweißnaht während des thermischen Verschweißens begründet. Die Schweißnaht bildet sich an den Stellen aus, an denen die Oberflächen der eingesetzten dünneren Platten thermisch miteinander verschweißt werden. In Abhängigkeit des Vorhandenseins bzw. der Dicke der Schweißnaht wird der Brandtest B2 (gemäß DIN 4102-1: 1998-05) bestanden oder nicht. Je umfangreicher bzw. dicker die Schweißnaht, desto höher brennen die Flammen. Dieses negative Brandverhalten (gegenüber den dünneren Ausgangsplatten) der zwei- oder mehrlagigen Platten aufgrund des Vorhandenseins einer Schweißnaht wird auch als "Dochteffekt" bezeichnet. Ist hingegen keine Schweißnaht oder nur eine sehr dünne Schweißnaht vorhanden, sind die jeweiligen dünneren Platten nicht fest genug miteinander verbunden, sodass das entsprechende Produkt nicht stabil ist.

Die in einer bevorzugten Ausführungsform mit dem erfindungsgemäßen Verfahren durch thermisches Verschweißen hergestellten zumindest zweilagigen Platten zeichnen sich folglich dadurch aus, dass die entsprechende Anzahl an dünneren Ausgangsplatten (TS) und (PA) auf sehr stabile Weise zu den zumindest zweilagigen Platten (Produkt) zusammengefügt werden kann, sofern dieses Zusammenfügen durch thermisches Verschweißen erfolgt. Die im erfindungsgemäßen Verfahren gebildeten Schweißnähte, die aufgrund des thermischen Verschweißens die einzelnen dünneren Ausgangsplatten zu der zumindest zweilagigen Platte miteinander verbinden, zeichnen sich durch eine hohe Stabilität sowie insbesondere Homogenität aus. Die Schweißnähte sind dann homogen, wenn sich die Schweißnahtdicke über die gesamte Ausdehnung der Schweißnaht überhaupt nicht oder in einem nur geringen Ausmaß ändert.

Das erfindungsgemäße Verfahren ist in dieser Ausführungsform von seinem Prinzip her ein sogenanntes "kontaktloses Verschweißen" (oder "berührungsloses Erhitzen"), da die Wärmeübertragung von den Heizelementen auf die zu verschweißenden Oberflächen der dünneren thermoplastischen bzw. auf Material mit einem sehr niedrigen Zelldurchmesser basierenden Platten (auch als "Ausgangsplatten" bezeichnet) ohne direkten Kontakt zwischen Heizelement und Ausgangsplatte stattfindet. Dies hat den Vorteil, dass im erfindungsgemäßen Verfahren keine (oder nur in sehr geringem Umfang) Dellen bzw. Einfallstellen auf den Oberflächen der zu verschweißenden Ausgangsplatten gebildet werden. Diese Einfallstellen sind jedoch insbesondere in den Randbereichen der Ausgangsplatten ein generelles Problem bei Verfahren, die auf einem direkten Kontakt zwischen Heizelement und zu verschweißender Oberfläche beruhen. Solche Dellen/Einfallstellen führen zu verstärkten Inhomogenitäten in der Schweißnaht, was sich wiederum (wie nachfolgend aufgeführt) negativ auf das Brandverhalten, aber auch die Stabilität der zumindest zweilagigen thermoplastischen Schaumstoffplatten auswirken kann.

Aufgrund der Verwendung von mindestens zwei Heizelementen, die auf parallel zueinander versetzten Ebenen und ohne direkten Kontakt mit den zu verschweißenden Ausgangsplatten im Rahmen dieser Ausführungsform des erfindungsgemäßen Verfahrens eingesetzt werden, ist als weiterer Vorteil festzuhalten, dass die zu verschweißenden Oberflächen der Ausgangsplatten in einem weit geringerem Maße einer unterschiedlichen Wärmebelastung ausgesetzt sind im Vergleich zu Verfahren gemäß dem Stand der Technik. Bei der Verwendung von nur einem Heizelement, das gegebenenfalls auch zweigeteilt sein kann, aber wo die einzelnen Teile auf einer Ebene geführt werden, sind im Gegensatz zum erfindungsgemäßen Verfahren die einzelnen Bereiche der jeweiligen Plattenoberfläche der zu verschweißenden Ausgangsplatten einer unterschiedlichen Wärmebelastung ausgesetzt, weil insbesondere die Randbereiche der Ausgangsplatten im Durchschnitt über eine deutlich längere Zeitspanne der entsprechenden Wärmequelle direkt oder indirekt ausgesetzt sind. Dies hat wiederum Auswirkungen auf die Homogenität der Schweißnaht.

In diesem Zusammenhang ist auch zu berücksichtigen, dass bei beweglichen Heizelementen durch die Dynamik des Ein- und Ausfahrens der Heizelemente zwischen die zu verschweißenden Ausgangsplatten kalte Luft hinter dem Heizelement hergezogen wird, während hingegen warme Luft vor dem Heizelement "aus dem Zwischenraum hinausgeschoben wird". Die auf diese Weise eintretende Pfropfenströmung oder turbulente Strömung zwischen den zu verschweißenden Platten hat wiederum negative Auswirkungen auf die Homogenität und somit Stabilität der zu bildenden Schweißnaht. Aufgrund der erfindungsgemäßen Verwendung von zwei beweglichen Heizelementen auf zueinander parallelen Ebenen wird hingegen Luft nur in einem deutlich geringerem Maße verdrängt und führt daher nicht zu einem unkontrollierten Ein- und Ausströmen von zu kalter oder heißer Luft. Insbesondere wenn im erfindungsgemäßen Verfahren zwei Heizelemente verwendet werden, die auf parallelen Ebenen aus zueinander entgegengesetzten Richtungen in den Zwischenraum zwischen den Ausgangplatten eingeführt werden, kann das Problem der Pfropfenströmung bzw. turbulenten Strömung deutlich minimiert werden und eine noch homogenere Schweißnaht zwischen den zu verschweißenden Ausgangsplatten erzielt werden. Dieser Effekt kann weiterhin verstärkt werden, wenn auch das Ausfahren der beiden Heizelemente in jeweils entgegengesetzte Richtungen erfolgt. Besonders vorteilhaft ist dabei das Einfahren und Ausfahren der einzelnen Platten ohne Richtungsänderung, weil dadurch das erfindungsgemäße Verfahren schneller durchgeführt werden kann im Vergleich zu einer Variante mit Richtungsumkehr der beiden Heizelemente beim Ausfahrschritt im Vergleich zum Einfahrschritt.

Ein weiterer Vorteil ist im erfindungsgemäßen Verfahren darin zu sehen, dass hinsichtlich der Plattendicke der Ausgangsplatten keine Begrenzungen erforderlich sind. Im Gegensatz dazu können in Verfahren gemäß dem Stand der Technik, beispielsweise wie sie in DE-A 10 2012 204 822 offenbart sind, nur Ausgangsplatten mit einer maximalen Dicke von 80 bis 100 mm verarbeitet werden, weil aufgrund des prinzipiell V-förmigen Zuführens (und Bewegens) der Ausgangsplatten mindestens eine der Ausgangsplatten während des thermischen Verschweißens geknickt wird. Da bei diesem Verfahren ein prinzipiell starres Heizelement, insbesondere ein Heizschwert, verwendet wird, müssen die Ausgangsplatten über das Heizelement bewegt werden. Im Gegensatz dazu wird im erfindungsgemäßen Verfahren das Heizelement zwischen den - in diesem Verfahrensstadium - prinzipiell starren Ausgangsplatten bewegt. Ein Bewegen der Ausgangsplatten findet im erfindungsgemäßen Verfahren prinzipiell erst nach Entfernung der Heizelemente aus dem Plattenzwischenraum statt, wobei die zu verschweißenden Ausgangsplatten durch Bewegung von mindestens einer der Ausgangsplatten miteinander verbunden werden. Mit dem erfindungsgemäßen Verfahren lassen sich so problemlos drei- oder höherlagige Platten von beliebiger Dicke herstellen.

Ein weiterer Vorteil in einer Ausführungsform des erfindungsgemäßen Verfahrens ist darin zu sehen, dass prinzipiell sehr kurze Umstellzeiten durchgeführt werden können. Unter "Umstellzeiten" wird erfindungsgemäß die Zeit verstanden, die zwischen Erhitzen bzw. Aufschmelzen der Oberfläche der Ausgangsplatte und dem Zusammenfügen der erhitzten bzw. aufgeschmolzenen Ausgangsplatten verstreicht. Im erfindungsgemäßen Verfahren ist dies somit die Zeitspanne, die mit dem Einführen von wenigstens zwei Heizelementen gemäß Schritt b) beginnt und mit dem Zusammenführen der entsprechenden Ausgangsplatten gemäß Schritt e) endet. Eine kurze Umstellzeit kann insbesondere aufgrund der Beweglichkeit der Heizelemente im Rahmen eines kontaktlosen Verschweißens erzielt werden.

Im Rahmen der vorliegenden Erfindung wird unter den Begriffen "Thermoplast" oder "thermoplastische Schaumstoffplatte" Folgendes verstanden. Thermoplaste, auch Plastomere genannt, sind polymere Kunststoffe, die sich in einem bestimmten Temperaturbereich (thermoplastisch) verformen lassen. Dieser Vorgang ist prinzipiell reversibel, das heißt er kann durch Abkühlung und Wiedererwärmung bis in den schmelzflüssigen Zustand mehrfach wiederholt werden. Thermoplastische Schaumstoffplatten sind folglich Schaumstoffe in Plattenform, die über die vorgenannten Polymereigenschaften eines Thermoplastes verfügen. Eine thermoplastische Schaumstoffplatte ist überwiegend, also zu mindestens 50 Gew.-%, aus mindestens einem Thermoplast hergestellt (bezogen auf das Gesamtgewicht der jeweiligen Platten). Gegebenenfalls können noch weitere Materialien/Komponenten in der thermoplastischen Schaumstoffplatte enthalten sein, die selbst keine Thermoplasten sind. Vorzugsweise ist die thermoplastische Schaumstoffplatte vollständig oder nahezu vollständig (mindestens 95 Gew.-%) aus mindestens einem Thermoplast hergestellt.

Im Rahmen der vorliegenden Erfindung wird unter dem Begriff "Platte (PA), die aus einem Material mit einem mittleren Zelldurchmesser < 1 000 nm hergestellt ist" Folgendes verstanden. Das entsprechende Material, das einen mittleren Zelldurchmesser ≤ 1 000 nm aufweist, ist plattenförmig angeordnet bzw. als Platte hergestellt. Eine solche dünnere Platte (PA) ist überwiegend, also zu mindestens 50 Gew.-%, aus mindestens einem Material mit einem mittleren Zelldurchmesser ≤ 1 000 nm hergestellt (bezogen auf das Gesamtgewicht der jeweiligen Platte). Gegebenenfalls können noch weitere Materialien/Komponenten in der entsprechenden dünneren Platte (PA) enthalten sein, die selbst keinen mittleren Zelldurchmesser ≤ 1 000 nm aufweisen. Vorzugsweise ist die dünnere Platte (PA) vollständig oder nahezu vollständig (mindestens 95 Gew.-%) aus mindestens einem Material mit einem mittleren Zelldurchmesser ≤ 1 000 nm hergestellt. Durch die Herstellung dieses Materials in Plattenform ändert sich der mittlere Zelldurchmesser nicht.

Der mittlere Zelldurchmesser der Platte (PA) wird nach dem Fachmann bekannten Methoden basierend auf Messung der Gasadsorption/-desorption durch Anwendung der BET- und Kelvin-Gleichungen bestimmt (siehe dazu insbesondere Schuck G. et al.: Pore Size Distribution of Silica Systems. In Fricke J. (Hrsg.): Aerogels. Proceedings of the First International Symposium, Würzburg, Fed. Rep. of Germany, September 23-25, 1985. Berlin, Heidelberg 1986, Seite 148-153).

Nachfolgend wird das erfindungsgemäße Verfahren zur Herstellung einer zumindest zweilagigen Platte sowie die zumindest zweilagige Platte als solche näher definiert.

Die mit dem erfindungsgemäßen Verfahren hergestellte Platte ist zumindest zweilagig, sie kann also genau zwei Lagen aufweisen oder dreilagig, vierlagig, fünflagig oder noch höherlagig sein. Wie vorstehend bereits ausgeführt, ergibt sich die Anzahl der Lagen der Platte als solche aus der Anzahl der dünneren Platten (TS) und (PA), die miteinander verbunden, vorzugsweise miteinander thermisch verschweißt werden. Die dünneren Platten werden auch als Ausgangsplatten bezeichnet. Im Falle einer zweilagigen Platte als solche werden also zwei dünnere Platten, eine erste dünnere thermoplastische Platte und eine zweite dünnere Platte, die aus einem Material mit einem mittleren Zelldurchmesser ≤ 1 000 nm hergestellt ist, miteinander verbunden, vorzugsweise thermisch verschweißt. Bei einer drei- oder vierlagigen Platte als solche werden somit drei- bzw. vier dünnere Platten miteinander verbunden, insbesondere thermisch verschweißt.

Sofern noch höherlagige Platten als solche hergestellt werden sollen, beispielsweise eine zehnlagige Platte, müssen demzufolge die der Anzahl der Lagen entsprechende Anzahl an dünneren Platten (TS) und (PA), beispielsweise zehn dünnere Platten, miteinander verbunden werden. Vorzugsweise ist die erfindungsgemäße Platte zweilagig, dreilagig oder vierlagig, insbesondere ist die erfindungsgemäße Platte dreilagig. Das Verbinden, insbesondere das thermische Verschweißen als solches (Durchführung), wird weiter unten im Text im Zusammenhang mit dem erfindungsgemäßen Herstellungsverfahren näher definiert.

Voraussetzung bei jeder zumindest zweilagigen Platte, die nach dem erfindungsgemäßen Verfahren hergestellt wird, ist, dass in der entsprechenden Anzahl an Lagen (also die konkrete Anzahl an dünneren Ausgangsplatten (PA) und (TS)) immer mindestens eine dünnere thermoplastische Schaumstoffplatte (TS) und mindestens eine dünnere Platte (PA) als Ausgangsplatten verwendet werden. Während die dünnere Ausgangsplatte (TS) zwingend thermoplastisch ist, ist dies bei der dünneren Ausgangspatte (PA) nicht der Fall. Die dünnere Platte (PA) ist hingegen über den mittleren Zelldurchmesser (von ≤ 1 000 nm) des Materials definiert, das für die Herstellung der entsprechenden Platte verwendet worden ist. Die Platte (PA) kann gegebenenfalls über thermoplastische Bestandteile in geringen Mengen verfügen, vorzugsweise ist die Platte (PA) jedoch weitgehend, insbesondere vollständig frei von thermoplastischen Bestandteilen. Im Gegensatz dazu kann die dünnere Ausgangsplatte (TS) ebenfalls geringe Anteile an Material mit einem mittleren Zelldurchmesser ≤ 1 000 nm aufweisen, vorzugsweise ist die dünnere Platte (TS) jedoch weitgehend, insbesondere vollständig frei von einem solchen Material mit einem mittleren Zelldurchmesser ≤ 1 000 nm.

In einer bevorzugten Ausführungsform der Erfindung wird eine dreilagige Platte hergestellt durch Verbinden, vorzugsweise durch thermisches Verschweißen von zwei dünneren thermoplastischen Schaumstoffplatten (TS) und einer dünneren Platte (PA), wobei jeweils eine dünnere thermoplastische Schaumstoffplatte (TS) auf jeweils einer sich gegenüberliegenden Seite der dünneren Platte (PA) unter Erhalt der dreilagigen Platte aufgebracht wird.

In einer weiteren bevorzugten Ausführungsform der vorliegenden Erfindung wird aus einer vorstehend beschriebenen dreilagigen Platte eine vier- oder höherlagige Platte (vorzugsweise durch thermisches Verschweißen), hergestellt. Dabei wird ausgehend von der vorstehend beschriebenen dreilagigen Platte eine zweite dünnere Platte (PA) auf eine von einer dünneren thermoplastischen Schaumstoffplatte (TS) stammenden Seite der dreilagigen Platte aufgebracht, wobei die daraus erhaltene vierlagige Platte abwechselnd insgesamt vier Lagen aus dünneren thermoplastischen Schaumstoffplatten (TS) und dünneren Platten (PA) aufweist und die erste und zweite dünnere Platte (PA) sich auf jeweils einer gegenüberliegenden Seite einer dünneren thermoplastischen Schaumstoffplatte (TS) befinden, wobei gegebenenfalls zum Erhalt von höherlagigen Platten das abwechselnde Aufbringen einer weiteren dünneren thermoplastischen Schaumstoffplatte (TS) oder einer dünneren Platte (PA) mindestens einfach wiederholt wird.

Die zum Verbinden verwendeten dünneren Ausgangsplatten (TS) und (PA) entsprechen hinsichtlich ihrer chemischen Zusammensetzung den im Rahmen der vorliegenden Erfindung hergestellten zumindest zweilagigen Platten als solche. Bei dieser Betrachtungsweise werden jedoch beispielsweise Klebstoffe, die bei einem etwaigen Verbinden der dünneren Ausgangsplatten durch Verkleben auf die jeweiligen Oberflächen der dünneren Ausgangsplatten aufgebracht werden, nicht berücksichtigt. Sinngemäßes gilt auch für etwaige sonstige auf die Oberflächen der Ausgangsplatten aufgebrachte Komponenten wie Absorber von elektromagnetischer Strahlung oder Flammschutzmittel. Ebenso wenig werden bei dieser Betrachtungsweise die bei einem Verbinden durch thermisches Verschweißen infolge der Ausbildung der Schweißnaht an den entsprechenden Oberflächen auftretenden chemischen Veränderungen/Reaktionen mitberücksichtigt. Die jeweils miteinander zu verbindenden, vorzugsweise thermisch zu verschweißenden, dünneren Ausgangsplatten weisen vorzugsweise dieselben Dimensionen auf. Vorzugsweise erfolgt das Verbinden an den jeweils flächenmäßig größten Seiten der jeweiligen Ausgangsplatten.

Die Dimensionierung der miteinander zu verbindenden dünneren Platten (TS) und (PA) ist beliebig. Hinsichtlich ihrer Länge und Breite können sie Maße im Zentimeterbereich bis hin zu mehreren Metern aufweisen. Hinsichtlich ihrer dritten Dimension (Dicke) sind theoretisch ebenfalls beliebige Maße denkbar. In der Praxis weisen die dünneren Platten eine Dicke im Bereich von 5 bis 300 mm auf.

Bezogen auf ein rechtwinkliges Koordinatensystem wird erfindungsgemäß die Länge einer Ausgangsplatte bzw. einer zumindest zweilagigen Platte als solche auch als "x-Richtung" bezeichnet, die entsprechende breite als "y-Richtung" und die Dicke als "z-Richtung". Die Dicke der zumindest zweilagigen Platte steigt mit zunehmender Anzahl von verbundenen Ausgangsplatten kontinuierlich an.

Die vorstehend bzw. nachfolgend angegebenen Werte hinsichtlich der Dicke der dünneren Platten (TS) und (PA) beziehen sich auf die entsprechenden Werte einer Ausgangsplatte, die für sich genommen noch keinen Verbindungsschritt, insbesondere keinen thermischen Verschweißungsschritt, erfahren hat.

Die Dicke der im erfindungsgemäßen Verfahren hergestellten zumindest zweilagigen Platten ergibt sich somit aus der Gesamtdicke der insgesamt eingesetzten dünneren Platten (Ausgangsplatten). Bei der Ausführungsform des thermischen Verschweißens werden die jeweils miteinander zu verschweißenden Oberflächen der thermoplastischen Ausgangsplatten zumindest etwas auf- oder angeschmolzen (Aufschmelzschritt), was in Abhängigkeit von den übertragenen Energiemengen zu einer gewissen Reduzierung der Dicke der jeweiligen thermoplastischen Ausgangsplatten führen kann. An den Stellen, an denen die Ausgangsplatten miteinander thermisch verschweißt werden, bildet sich eine Schweißnaht aus. Insbesondere wenn im Rahmen des Herstellungsverfahrens ein Verpressungs- und/oder Aufschmelzschritt mit der Übertragung einer großen Energiemenge durchgeführt wird, ist die Dicke der zumindest zweilagigen Platte als solche geringer als die Summe der jeweiligen Dicken der eingesetzten Ausgangsplatten. Sinngemäßes gilt auch bei Verpressen von miteinander verklebten Ausgangsplatten.

Vorzugsweise weist die mindestens eine dünnere thermoplastische Schaumstoffplatte (TS) eine Länge (x-Richtung) von 500 bis 2 800 mm, vorzugsweise von 1 000 bis 1500 mm, eine Breite (y-Richtung) von 200 bis 1 250 mm, vorzugsweise von 500 bis 900 mm, und eine Dicke (z-Richtung) von 2 bis 100 mm, vorzugsweise von 5 bis 50 mm, auf.

Vorzugsweise weist die dünnere Platte (PA) eine Länge (x-Richtung) von 500 bis 2 800 mm, vorzugsweise von 1 000 bis 1 500 mm, eine Breite (y-Richtung) von 200 bis 1 250 mm, vorzugsweise von 500 bis 900 mm, und eine Dicke (z-Richtung) von 10 bis 200 mm, vorzugsweise von 20 bis 100 mm, auf.

Weiterhin ist es bevorzugt, dass jede dünnere thermoplastische Schaumstoffplatte (TS) und jede dünnere Platte (PA) identische Werte für die Länge (x-Richtung) und die Breite (y-Richtung) aufweisen.

Weiterhin ist es bevorzugt, dass die mindestens eine dünnere thermoplastische Schaumstoffplatte (TS) und die mindestens eine dünnere Platte (PA) über jeweils eine der beiden flächenmäßig größten Seiten (xy-Ebene) der entsprechenden Platte miteinander verbunden werden, besonders bevorzugt weisen die miteinander zu verbindenden Platten identische Länge- und Breitedimensionen auf.

Vorzugsweise weist die zumindest zweilagige Platte eine Wärmeleitfähigkeit λ ≤ 0,030 W/(mK), vorzugsweise ≤ 0,025 W/(mK), insbesondere ≤ 0,020 W/(mK), auf. Die entsprechenden Wärmeleitfähigkeitswerte gelten dabei für die gesamte zumindest zweilagige Platte, vorzugsweise für eine zweilagige oder eine dreilagige Platte. Die Wärmeleitfähigkeit im Rahmen der vorliegenden Erfindung wird wird an der ganzen zumindest zweilagigen Platte nach EN 12667 oder EN 12939 bei einer Mitteltemperatur von 10±0,3°C gemessen (nach Lagerung von 6 h bei 23 °C und 50 % Luftfeuchte).

Die dünneren thermoplastischen Schaumstoffplatten (TS) als solche sind dem Fachmann prinzipiell bekannt. Geeignete thermoplastische Schaumstoffplatten sind beispielsweise in Form von Blends in der WO 2009/047487 offenbart. Beispielsweise können Platten aus amorphen, kristallinen oder teilkristallinen thermoplastischen Schaumstoffen eingesetzt werden.

Vorzugsweise ist die dünnere thermoplastische Schaumstoffplatte (TS) ein Partikelschaumstoff oder ein Extrusionsschaumstoff ist auf Basis mindestens eines Polymers, ausgewählt aus der Gruppe bestehend aus Polystyrol, Polystyrolcopolymeren, Polyethersulfon, Polysulfon, Polyethylenterephthalat, thermoplastischem Polyurethan, Polyolefinen, Polyolefincopolymeren und Acrylpolymeren, vorzugsweise ein Partikelschaumstoff oder Extrusionsschaumstoff auf Basis mindestens eines Polymers, ausgewählt aus der Gruppe bestehend aus Polystyrol, Polystyrolcopolymeren, Polyethersulfon, Polysulfon, thermoplastischem Polyurethan und Polyethylenterephthalat, am meisten bevorzugt ein Partikelschaumstoff oder Extrusionsschaumstoff auf Basis mindestens eines Polymers, ausgewählt aus der Gruppe bestehend aus Polystyrol, Polystyrolcopolymeren, Polyethersulfon und Polyethylenterephthalat.

Geeignete Polyolefine sind beispielsweise Polyethylen und/oder Polypropylen.

Polystyrolcopolymere werden auch als "aus Styrol hergestellte Copolymere" oder als "Styrolcopolymerisate" bezeichnet. Ist das in der dünneren thermoplastischen Schaumstoffplatte (TS) üblicherweise enthaltene Polymer ein Polystyrolcopolymer, bedeutet dies, dass zur Herstellung des Polymers, neben dem monomeren Styrol, mindestens ein weiteres Monomer (Comonomer) erforderlich ist. Als Comonomere zu Styrol eignen sich prinzipiell alle mit Styrol polymerisierbaren Monomere.

Vorzugsweise sind mindestens 50 Gew.-% Styrol in dem Polystyrolcopolymer einpolymerisiert, bezogen auf das Gesamtgewicht des Polystyrolcopolymers.

Vorzugsweise weist ein aus Styrol hergestelltes Copolymer als Comonomer zu Styrol ein Monomer auf, das ausgewählt ist aus α-Methylstyrol, kernhalogenierten Styrolen, kernalkylierten Styrolen, Acrylnitril, Acrylsäureestern, Methacrylsäureestern, N-Vinylverbindungen, Maleinsäureanhydrid, Butadien, Divinylbenzol und Butandioldiacrylat. Acrylsäureester sowie Methacrylsäureester sind vorzugsweise erhältlich aus Alkoholen mit einem bis acht Kohlenstoffatomen. Eine geeignete N-Vinylverbindung ist beispielsweise Vinylcarbazol. Bevorzugte aus Styrol hergestellte Copolymere sind Styrol-Acrylnitril-Copolymere (SAN) oder Acrylnitril-Butadien-Styrol-Copolymere (ABS).

Ist die dünnere thermoplastische Schaumstoffplatte (TS) ein Partikelschaumstoff, so ist der Partikelschaumstoff vorzugsweise Styropor oder Neopor, die kommerziell von der BASF SE erhältlich sind. In diesem ist das Polymer ein Polystyrol, ein Polystyrolcopolymer oder eine Mischung aus Polystyrol oder einem Polystyrolcopolymer mit mindestens einem weiteren Polymer. Mischungen aus Polystyrol oder einem Polystyrolcopolymer mit mindestens einem weiteren Polymer werden auch als "Blends" bezeichnet. Als mindestens ein weiteres Polymer eignen sich alle dem Fachmann bekannten Polymere, wie beispielsweise die vorstehend beschriebenen Polymere.

Am meisten bevorzugt ist die dünnere thermoplastische Schaumstoffplatte (TS) ein Extrusionsschaumstoff aus einem extrudierten Polystyrol, der beispielsweise unter der Bezeichnung "Styrodur" von der BASF SE kommerziell erhältlich ist.

Sofern die dünnere thermoplastische Schaumstoffplatte (TS) ein Extrusionsschaumstoff ist, wird vorzugsweise an denjenigen Seiten (Oberflächen), die mit einer anderen Ausgangsplatte verbunden werden sollen, die Schäumhaut entfernt. Gegebenenfalls kann dies auch an den sonstigen Seiten (Oberflächen) der entsprechenden Ausgangsplatte durchgeführt werden. Das Entfernen der Schäumhaut (die auch als "Extrusionshaut" bezeichnet wird) als solches ist dem Fachmann bekannt. Dies bedeutet, dass die entsprechende Ausgangsplatte an den zu verbindenden Oberflächen, vorzugsweise an den thermisch zu verschweißenden Seiten (Oberflächen), schäumhautfrei ist.

Vorzugsweise ist die dünnere thermoplastische Schaumstoffplatte (TS) zu mindestens 90 Gew.-%, bevorzugt zu mindestens 95 Gew.-%, besonders bevorzugt zu 98 Gew.-%, aus mindestens einem Thermoplast hergestellt (bezogen auf das Gesamtgewicht der dünneren thermoplastischen Schaumstoffplatte (TS)).

Weitere Komponenten, die in der dünneren thermoplastischen Schaumstoffplatte (TS) enthalten sein können, die also beispielsweise bei deren Herstellungsprozess in das Volumen der Platte integriert werden, können beispielsweise Flammschutzmittel, Nukleierungsmittel, Farbstoffe, IR-Absorber oder sonstige Additive sein. Die vorgenannten Komponenten sind allesamt dem Fachmann bekannt Sofern beim Herstellungsprozess der entsprechenden thermoplastischen Platte Treibmittel eingesetzt werden, beispielsweise im Rahmen eines Extrusionsverfahrens, werden diese Treibmittel bei der Bestimmung des vorgenannten Gesamtgewichts der dünneren thermoplastischen Schaumstoffplatte (TS) nicht mitberücksichtigt. Diese ist insbesondere dadurch begründet, dass Treibmittel mit der Zeit aus der entsprechenden Platte ausdiffundieren. Demzufolge werden bei der Bestimmung des Gesamtgewichts der dünneren thermoplastischen Schaumstoffplatte (TS) nur diejenigen Komponenten/Verbindungen mitberücksichtigt, die keine Gase sind und folglich dauerhaft in der entsprechenden dünneren Ausgangsplatte vorhanden sind und die nicht ausdiffundieren können.

Weiterhin ist es im Rahmen der vorliegenden Erfindung bevorzugt, dass die dünnere thermoplastische Schaumstoffplatte (TS) wenig oder vorzugsweise gar kein Bindemittel und/oder Material mit einem mittleren Zelldurchmesser ≤ 1 000 nm enthält. Demzufolge enthält die dünnere thermoplastische Schaumstoffplatte (TS) (bezogen auf das Gesamtgewicht der dünneren thermoplastischen Schaumstoffplatte (TS)) Bindemittel und/oder Material mit einem mittleren Zelldurchmesser ≤ 1 000 nm, insbesondere Aerogele, zu maximal 0,5 Gew.-%, mehr bevorzugt zu maximal 0,1 Gew.-%, besonders bevorzugt ist die dünnere thermoplastische Schaumstoffplatte (TS) vollständig frei von Bindemittel und/oder Material mit einem mittleren Zelldurchmesser ≤ 1 000 nm, insbesondere Aerogel.

Die dünnere thermoplastische Schaumstoffplatte (TS) kann prinzipiell beliebige Werte hinsichtlich des mittleren Zelldurchmessers (auch als "Zellgröße" oder "mittlere Zellgröße" bezeichnet) aufweisen. In der Praxis weisen thermoplastische Schaumstoffplatten einen mittleren Zelldurchmesser auf, der größer ist als 1 µm (entspricht 1 000 nm), die dünneren thermoplastischen Schaumstoffplatten (TS) haben also einen größeren mittleren Zelldurchmesser als die dünneren Platten (PA), deren mittlerer Zelldurchmesser maximal 1 µm (1 000 nm) betragen kann. Vorzugsweise ist der mittlere Zelldurchmesser der dünneren thermoplastischen Schaumstoffplatten (TS) um mindestens den Faktor 10, insbesondere um mindestens den Faktor 100, größer als der entsprechende mittlere Zelldurchmesser der Platten (PA). Der mittlere Zelldurchmesser kann nach der Norm "ASTM D 3576" (Bestimmung der Zellgröße von harten Schaumstoffen; Ausgabe 2015), also nach dem Fachmann bekannten Methoden gemessen werden. Die spezifischen Werte des mittleren Zelldurchmessers in einer konkreten Platte können nach dem Fachmann bekannten Methoden eingestellt werden, beispielsweise durch die gewählten Druck- oder Temperaturwerte bei der Plattenherstellung und/oder die Art oder Menge des Treibmittels und/oder die Art oder Menge von Nukleierungsmittel, beispielsweise während des Extrusionsverfahrens.

Vorzugsweise weist die dünnere thermoplastische Schaumstoffplatte (TS) einen mittleren Zelldurchmesser ≥ 10 µm, vorzugsweise ≥ 50 µm und besonders bevorzugt ≥ 100 µm auf. Die Obergrenze des mittleren Zelldurchmessers der dünneren thermoplastischen Schaumstoffplatte (TS) beträgt in der Regel nicht mehr als 500 µm, vorzugsweise maximal 250 µm.

Die dünneren thermoplastischen Schaumstoffplatten (TS) können prinzipiell beliebige Dichten aufweisen. Vorzugsweise beträgt die Dichte der dünneren thermoplastischen Schaumstoffplatten (TS) 10 bis 500 g/l, mehr bevorzugt 15 bis 200 g/l, insbesondere 20 bis 150 g/l.

Weiterhin ist es bevorzugt, dass die dünnere Schaumstoffplatte (TS) eine Wärmeleitfähigkeit λ ≤ 0,035 W/(mK), vorzugsweise ≤ 0,030 W/(mK) aufweist. Die Wärmeleitfähigkeit der dünneren Schaumplatte (TS) wird vor Herstellung der zumindest zweilagigen Platte nach EN 12667 oder EN 12939 bei einer Mitteltemperatur von 10 ± 0,3 °C bestimmt.

Die im erfindungsgemäßen Verfahren eingesetzte mindestens eine dünnere Platte (PA) als solche, die aus einem Material mit einem mittleren Zelldurchmesser ≤ 1 000 nm hergestellt ist, ist dem Fachmann ebenfalls bekannt. Vorzugsweise ist die dünnere Platte (PA) aus einem Material mit einem mittleren Zelldurchmesser ≤ 500 nm, vorzugsweise ≤ 250 nm, besonders bevorzugt ≤ 100 nm hergestellt.

Prinzipiell kann der mittlere Zelldurchmesser des zur Herstellung der dünneren Platte (PA) verwendeten Materials beliebig klein sein, in der Praxis ist er jedoch nicht kleiner als 10 nm, vorzugsweise beträgt er mindestens 20 nm, insbesondere mindestens 50 nm.

Die spezifischen Werte des mittleren Zelldurchmessers in einer konkreten Platte können nach dem Fachmann bekannten Methoden eingestellt werden, beispielsweise durch die gewählten Druck- oder Temperaturwerte bei der Plattenherstellung und/oder die Art oder Menge des Lösungsmittels oder des Katalysators, beispielsweise bei der Durchführung des Sol-Gel-Prozesses.

Vorzugsweise ist das Material mit einem mittleren Zelldurchmesser ≤ 1 000 nm mindestens ein Aerogel und/oder mindestens ein Xerogel, vorzugsweise ist es mindestens ein Aerogel. Ob das entsprechende Material ein Aerogel oder Xerogel ist, hängt in der Praxis vom entsprechenden Herstellungsprozess des jeweiligen Materials ab. Im Allgemeinen wird unter einem Xerogel ein solches Material verstanden, dass durch ein Sol-Gel-Verfahren hergestellt wurde, wobei die flüssige Phase durch Trocknung unterhalb der kritischen Temperatur und oberhalb des kritischen Drucks der flüssigen Phase ("subkritische Bedingungen") aus dem Gel entfernt wurde. Im Gegensatz dazu spricht man im Allgemeinen von Aerogelen, wenn die Entfernung der flüssigen Phase aus dem Gel während des Sol-Gel-Prozesses unter "überkritischen Bedingungen" durchgeführt wurde. Solche Aerogele oder Xerogele sowie die entsprechenden Herstellungsverfahren gemäß dem Sol-Gel-Verfahren als solchem sind dem Fachmann prinzipiell bekannt, siehe beispielsweise WO 2012/000917.

Weiterhin ist es bevorzugt, dass die dünnere Platte (PA) aus mindestens einem anorganischen oder organischen Aerogel hergestellt ist. In anderen Worten ausgedrückt bedeutet dies, dass das Material mit einem mittleren Zelldurchmesser ≤ 1 000 nm vorzugsweise ein anorganisches oder organisches Aerogel ist.

Anorganische Aerogele als solche sind dem Fachmann bekannt, sie werden vorzugsweise nach dem Sol-Gel-Verfahren hergestellt und sind beispielsweise in EP-A 2 665 876, WO 2010/046074 oder EP-A 2 597 072 beschrieben. Das kommerziell von der BASF SE (Ludwigshafen, Deutschland) erhältliche Produkt "Slentex" ist ein Beispiel für ein anorganisches Aerogel.

Organische Aerogele als solche sind dem Fachmann ebenfalls bekannt. Sie werden vorzugsweise nach dem Sol-Gel-Verfahren hergestellt und sind beispielsweise in WO 2012/000917, WO 2016/008726, WO 2014/187710 oder WO 2015/144675 offenbart. Das kommerziell von der BASF SE (Ludwigshafen, Deutschland) erhältliche Produkt "Slentite" ist ein Beispiel für ein organisches Aerogel.

In einer bevorzugten Ausführungsform der Erfindung ist das Aerogel ein anorganisches Aerogel auf Basis von Metalloxiden, vorzugsweise auf Basis von mindestens einem Oxid von Silicium, Aluminium oder Titanium, insbesondere auf Basis von mindestens einem Oxid von Silicium (Silicat).

In einer weiteren bevorzugten Ausführungsform der vorliegenden Erfindung ist das Aerogel ein organisches Aerogel auf Basis von mindestens einem organischen Aerogel, das hergestellt wird durch Umsetzung der folgenden Komponenten (a1) bis (a3):
(a1) mindestens ein mehrfunktionelles Isocyanat, und
(a2) mindestens ein mehrfunktionelles substituiertes aromatisches Amin (a2-s) gemäß der allgemeinen Formel I 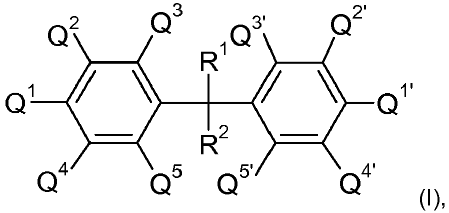 wobei R¹ und R² gleich oder unterschiedlich sein können und unabhängig voneinander ausgewählt werden aus Wasserstoff und linearen oder verzweigten Alkylgruppen mit von 1 bis 6 Kohlenstoffatomen und wobei sämtliche Substituenten Q¹ bis Q⁵ und Q^{1'} bis Q^{5'} gleich oder unterschiedlich sind und unabhängig voneinander ausgewählt werden aus Wasserstoff, einer primären Aminogruppe und einer linearen oder verzweigten Alkylgruppe mit von 1 bis 12 Kohlenstoffatomen, wobei die Alkylgruppe weitere funktionelle Gruppen tragen kann, unter der Voraussetzung, dass
   - die Verbindung gemäß der allgemeinen Formel I mindestens zwei primäre Aminogruppen umfasst, wobei zumindest eines aus Q¹, Q³ und Q⁵ eine primäre Aminogruppe ist und zumindest eines aus Q^{1'}, Q^{3'} und Q^{5'} eine primäre Aminogruppe ist und
   - Q², Q⁴, Q^{2'} und Q^{4'} so gewählt werden, dass die Verbindung gemäß der allgemeinen Formel I mindestens eine lineare oder verzweigte Alkylgruppe, die weitere funktionelle Gruppen tragen kann, mit von 1 bis 12 Kohlenstoffatomen in α-Position zu mindestens einer an den aromatischen Kern gebundenen primären Aminogruppe aufweist,
   und optional mindestens ein weiteres mehrfunktionelles aromatisches Amin (a2-u), welches sich von den Aminen (a2-s) gemäß der allgemeinen Formel I unterscheidet, und
   (a3) Wasser.

Vorzugsweise erfolgt in dieser Ausführungsform die Umsetzung in Gegenwart eines Lösungsmittels (C) und/oder in Gegenwart mindestens eines Katalysators (a4).

Die mehrfunktionellen Isocyanate (a1) werden im Folgenden gemeinsam als Komponente (a1) bezeichnet. Entsprechend werden die mehrfunktionellen Amine (a2) im Folgenden gemeinsam als Komponente (a2) bezeichnet. Es ist für den Fachmann offensichtlich, dass die genannten Monomerkomponenten im Aerogel in umgesetzter Form vorliegen.

Unter Funktionalität einer Verbindung soll im Rahmen der vorliegenden Erfindung die Zahl der reaktiven Gruppen pro Molekül verstanden werden. Im Fall der Monomerkomponente (a1) ist die Funktionalität die Anzahl der Isocyanatgruppen pro Molekül. Im Falle der Aminogruppen der Monomerkomponente (a2) bezeichnet die Funktionalität die Zahl der reaktiven Aminogruppen pro Molekül. Eine mehrfunktionelle Verbindung weist dabei eine Funktionalität von mindestens 2 auf.

Falls als Komponente (a1) beziehungsweise (a2) Mischungen aus Verbindungen mit unterschiedlicher Funktionalität zum Einsatz kommen, ergibt sich die Funktionalität der Komponenten jeweils aus dem zahlengewichteten Mittel der Funktionalität der einzelnen Verbindungen. Eine mehrfunktionelle Verbindung enthält mindestens zwei der oben genannten funktionellen Gruppen pro Molekül.

Im Rahmen dieser Ausführungsform wird als Komponente (a1) mindestens ein mehrfunktionelles Isocyanat umgesetzt.

Im Rahmen dieser Ausführungsform beträgt die eingesetzte Menge der Komponente (a1) vorzugsweise von 40 bis 99,8 Gew.-%, insbesondere von 55 bis 99,3 Gew.-% beträgt, besonders bevorzugt von 68 bis 97,5 Gew.-%, jeweils bezogen auf das Gesamtgewicht der Komponenten (a1), (a2) und (a3), welches 100 Gew.-% ergibt.

Als mehrfunktionelle Isocyanate kommen aromatische, aliphatische, cycloaliphatische und/oder araliphatische Isocyanate in Betracht. Derartige mehrfunktionelle Isocyanate sind an sich bekannt oder können nach an sich bekannten Methoden hergestellt werden. Die mehrfunktionellen Isocyanate können insbesondere auch als Mischungen eingesetzt werden, so dass die Komponente (a1) in diesem Fall verschiedene mehrfunktionelle Isocyanate enthält. Als Monomerbausteine (a1) in Betracht kommende mehrfunktionelle Isocyanate weisen zwei (im Folgenden "Diisocyanate" genannt) oder mehr als zwei Isocyanatgruppen pro Molekül der Monomerkomponente auf.

Insbesondere geeignet sind 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), 3,3'-Dimethyldiphenyldiisocyanat, 1,2-Diphenylethandiisocyanat und/oder p-Phenylendiisocyanat (PPDI), Tri-, Tetra-, Penta-, Hexa-, Hepta- und/oder Octamethylendiisocyanat, 2-Methylpentamethylen-1,5-diisocyanat, 2-Ethylbutylen-1,4-diisocyanat, Pentamethylen-1,5-diisocyanat, Butylen-1,4-diisocyanat, 1-Isocyanato-3,3,5-trimethyl-5-iso-cyanatomethyl-cyclohexan (Isophoron-diisocyanat, IPDI), 1,4- und/oder 1,3-Bis(iso-cyanatomethyl)cyclohexan (HXDI), 1,4-Cyclohexandiisocyanat, 1-Methyl-2,4- und/oder -2,6-cyclohexandiisocyanat und 4,4'-, 2,4'- und/oder 2,2'-Dicyclohexylmethandiisocyanat.

Als mehrfunktionelle Isocyanate (a1) sind aromatische Isocyanate bevorzugt. Besonders bevorzugt sind als mehrfunktionelle Isocyanate der Komponente (a1) folgende Ausführungsformen:
i) mehrfunktionelle Isocyanate auf Basis von Toluylendiisocyanat (TDI), insbesondere 2,4-TDI oder 2,6-TDI oder Mischungen aus 2,4- und 2,6-TDI;
ii) mehrfunktionelle Isocyanate auf Basis von Diphenylmethandiisocyanat (MDI), insbesondere 2,2'-MDI oder 2,4'-MDI oder 4,4'-MDI oder oligomeres MDI, das auch als Polyphenylpolymethylenisocyanat bezeichnet wird, oder Mischungen aus zwei oder drei der vorgenannten Diphenylmethandiisocyanate, oder Roh-MDI, welches bei der Herstellung von MDI anfällt, oder Mischungen aus mindestens einem Oligomer des MDI und mindestens einem der vorgenannten niedermolekularen MDI-Derivate;
iii) Gemische aus mindestens einem aromatischen Isocyanat gemäß Ausführungsform i) und mindestens einem aromatischen Isocyanat gemäß Ausführungsform ii).

Vorzugsweise beträgt der Gehalt an Isocyanatgruppen der Komponente (a1) von 5 bis 10 mmol/g, insbesondere von 6 bis 9 mmol/g, besonders bevorzugt von 7 bis 8,5 mmol/g. Dem Fachmann ist bekannt, dass der Gehalt an Isocyanatgruppen in mmol/g und das sogenannte Äquivalenzgewicht in g/Äquivalent in einem reziproken Verhältnis stehen. Der Gehalt an Isocyanatgruppen in mmol/g ergibt sich aus dem Gehalt in Gew.-% nach ASTM D-5155-96 A.

Komponente (a2) besteht aus mehrfunktionellen aromatischen Aminen, wobei die mehrfunktionellen aromatischen Amine (a2-s) gemäß der allgemeinen Formel I ein Bestandteil sind.

Unter mehrfunktionellen Aminen sind solche zu verstehen, welche mindestens zwei gegenüber Isocyanaten reaktive Aminogruppen pro Molekül aufweisen. Gegenüber Isocyanaten reaktiv sind dabei primäre und sekundäre Aminogruppen, wobei die Reaktivität der primären Aminogruppen im Allgemeinen deutlich höher ist als die der sekundären.

Vorzugsweise beträgt die eingesetzte Menge der Komponente (a2) von 0,1 bis 30 Gew.-%, insbesondere von 0,5 bis 20 Gew.-%, besonders bevorzugt von 2 bis 12 Gew.-%, jeweils bezogen auf das Gesamtgewicht der Komponenten (a1), (a2) und (a3), welches 100 Gew.-% ergibt.

Erfindungsgemäß sind R¹ und R² im Rahmen der allgemeinen Formel I gleich oder unterschiedlich und werden unabhängig voneinander ausgewählt aus Wasserstoff, einer primären Aminogruppe und einer linearen oder verzweigten Alkylgruppe mit von 1 bis 6 Kohlenstoffatomen. Vorzugsweise werden R¹ und R² ausgewählt aus Wasserstoff und Methyl. Besonders bevorzugt gilt R¹ = R² = H.

Vorzugsweise werden Q², Q⁴, Q^{2'} und Q^{4'} so gewählt, dass das substituierte aromatische Amin (a2-s) mindestens zwei primäre Aminogruppen umfasst, die jeweils eine oder zwei lineare oder verzweigte Alkylgruppen mit von 1 bis 12 Kohlenstoffatomen in α-Position aufweisen, die weitere funktionelle Gruppen tragen können. Sofern eines oder mehrere aus Q², Q⁴, Q^{2'} und Q^{4'} so gewählt werden, dass sie lineare oder verzweigte Alkylgruppen mit von 1 bis 12 Kohlenstoffatomen entsprechen, die weitere funktionelle Gruppen tragen, dann sind Aminogruppen und/oder Hydroxygruppen und/oder Halogenatome als solche funktionelle Gruppen bevorzugt.

Vorzugsweise werden die Alkylgruppen im Rahmen der Substituenten Q gemäß der allgemeinen Formel I ausgewählt aus Methyl, Ethyl, n-Propyl, iso-Propyl, n-Butyl, sek-Butyl und tert-Butyl.

Vorzugsweise werden die Amine (a2-s) ausgewählt aus der Gruppe bestehend aus 3,3',5,5'-Tetraalkyl-4,4'-diaminodiphenylmethan, 3,3',5,5'-Tetraalkyl-2,2'-diaminodiphenylmethan und 3,3',5,5'-Tetraalkyl-2,4'-diaminodiphenylmethan, wobei die Alkylgruppen in 3,3',5 und 5'-Position gleich oder unterschiedlich sein können und unabhängig voneinander ausgewählt werden aus linearen oder verzweigten Alkylgruppen mit von 1 bis 12 Kohlenstoffatomen, die weitere funktionelle Gruppen tragen können. Vorzugsweise sind vorgenannte Alkylgruppen Methyl, Ethyl, n-Propyl, i-Propyl, n-Butyl, sek-Butyl oder t-Butyl (jeweils unsubstituiert).

In einer Ausführungsform können eines, mehrere oder alle Wasserstoffatome einer oder mehrerer Alkylgruppen der Substituenten Q durch Halogenatome, insbesondere Chlor, ersetzt sein. Alternativ können eines, mehrere oder alle Wasserstoffatome einer oder mehrerer Alkylgruppen der Substituenten Q durch NH₂ oder OH ersetzt sein. Es ist jedoch bevorzugt, wenn die Alkylgruppen im Rahmen der allgemeinen Formel I aus Kohlenstoff und Wasserstoff aufgebaut sind.

In einer besonders bevorzugten Ausführungsform umfasst Komponente (a2) 3,3',5,5'-Tetraalkyl-4,4'-diaminodiphenylmethan, wobei die Alkylgruppen gleich oder unterschiedlich sein können und unabhängig ausgewählt werden aus linearen oder verzweigten Alkylgruppen mit von 1 bis 12 Kohlenstoffatomen, die optional funktionelle Gruppen tragen können. Vorzugsweise werden vorgenannte Alkylgruppen ausgewählt aus unsubstituierten Alkylgruppen, insbesondere Methyl, Ethyl, n-Propyl, iso-Propyl, n-Butyl, sek-Butyl und tert-Butyl, besonders bevorzugt aus Methyl und Ethyl. Ganz besonders bevorzugt sind 3,3'-5,5'-Tetraethyl-4,4'-diaminodiphenylmethan und/oder 3,3'-5,5'-Tetramethyl-4,4'-diaminodiphenylmethan.

Die vorgenannten mehrfunktionellen Amine des Typs (a2-s) sind dem Fachmann an sich bekannt oder können nach bekannten Methoden hergestellt werden. Eine der bekannten Methoden ist die Umsetzung von Anilin beziehungsweise von Derivaten des Anilins mit Formaldehyd unter saurer Katalyse, insbesondere die Umsetzung von 2,4-oder 2,6-Dialkylanilin.

Optional kann die Komponente (a2) auch weitere mehrfunktionelle aromatische Amine (a2-u) umfassen, welche sich von den Aminen der Struktur (a2-s) unterscheiden. Die aromatischen Amine (a2-u) weisen vorzugsweise ausschließlich aromatisch gebundene Aminogruppen auf, können jedoch auch sowohl (cyclo)aliphatisch als auch aromatisch gebundene reaktive Aminogruppen aufweisen.

Geeignete mehrfunktionelle aromatische Amine (a2-u) sind insbesondere Isomere und Derivate von Diaminodiphenylmethan. Im Rahmen von Komponente (a2) bevorzugte Isomere und Derivate von Diaminodiphenylmethan sind insbesondere 4,4'-Diaminodiphenylmethan, 2,4'-Diaminodiphenylmethan, 2,2'-Diaminodiphenylmethan und oligomeres Diaminodiphenylmethan.

Geeignete mehrfunktionelle aromatische Amine (a2-u) sind außerdem insbesondere Isomere und Derivate von Toluoldiamin. Im Rahmen von Komponente (a2) bevorzugte Isomere und Derivate von Toluoldiamin sind insbesondere Toluol-2,4-diamin und/oder Toluol-2,6-diamin und Diethyltoluoldiamine, insbesondere 3,5-Diethyltoluol-2,4-diamin und/oder 3,5-Diethyltoluol-2,6-diamin.

Der Anteil der Amine des Typs (a2-s) gemäß der allgemeinen Formel I am Gesamtgewicht aller mehrfunktionellen Amine der Komponente (a2), die somit insgesamt 100 Gew.-% ergeben, beträgt vorzugsweise von 10 bis 100 Gew.-%, insbesondere von 30 bis 100 Gew.-%, ganz besonders bevorzugt von 50 bis 100 Gew.-%, insbesondere von 80 bis 100 Gew.-%.

Der Anteil der mehrfunktionellen aromatischen Amine (a2-u), die sich von den Aminen des Typs (a2-s) unterscheiden, am Gesamtgewicht aller mehrfunktionellen Amine der Komponente (a2) beträgt vorzugsweise von 0 bis 90 Gew.-%, insbesondere von 0 bis 70 Gew.-%, besonders bevorzugt von 0 bis 50 Gew.-%, insbesondere von 0 bis 20 Gew.-%.

Komponente (a3) ist Wasser. Die bevorzugt eingesetzte Menge Wasser beträgt von 0,1 bis 30 Gew.-%, insbesondere von 0,2 bis 25 Gew.-%, besonders bevorzugt von 0,5 bis 20 Gew.-%, jeweils bezogen auf das Gesamtgewicht der Komponenten (a1), (a2) und (a3), welches 100 Gew.-% ergibt.

Das vorstehend beschriebene organische Aerogel wird vorzugsweise in Gegenwart mindestens eines Katalysators als Komponente (a4) durchgeführt.

Als Katalysatoren kommen im Prinzip alle dem Fachmann bekannten Katalysatoren in Betracht, welche die Trimerisierung von Isocyanaten (sogenannte Trimerisierungskatalysatoren) und/oder die Umsetzung von Isocyanaten mit Aminogruppen (sogenannte Gelkatalysatoren) und/oder die Umsetzung von Isocyanaten mit Wasser (sogenannte Treibkatalysatoren) beschleunigen.

Die Komponente (a4) wird zweckmäßigerweise in der geringsten wirksamen Menge eingesetzt. Vorzugsweise Anwendung finden Mengen von 0,01 bis 5 Gew.-teile, insbesondere von 0,1 bis 3 Gew.- teile, besonders bevorzugt von 0,2 bis 2,5 Gew.-teile der Komponente (a4) bezogen auf insgesamt 100 Gew.-teile der Komponenten (a1), (a2) und (a3).

Im Rahmen von Komponente (a4) bevorzugte Katalysatoren werden ausgewählt aus der Gruppe bestehend aus primären, sekundären und tertiären Aminen, Triazinderivaten, Organometallverbindungen, Metallchelaten, quaternäre Ammoniumsalzen, Ammoniumhydroxiden sowie Alkali- und Erdalkali-Hydroxiden, -alkoxiden und -carboxylaten.

Geeignete Katalysatoren sind insbesondere starke Basen, beispielsweise quaternäre Ammoniumhydroxide, wie zum Beispiel Tetraalkylammoniumhydroxide mit 1 bis 4 C-Atomen im Alkylrest und Benzyltrimethylammoniumhydroxid, Alkalimetallhydroxide, wie zum Beispiel Kalium- oder Natriumhydroxid und Alkalimetallalkoxide, wie zum Beispiel Natriummethylat, Kalium- und Natriumethylat und Kaliumisopropylat.

Im Rahmen von Komponente (a4) besonders bevorzugte Katalysatoren werden ausgewählt aus der Gruppe bestehend aus N,N-Dimethylcyclohexylamin, Bis(2-dimethylaminoethyl)ether, N,N,N,N,N-Pentamethyldiethylentriamin, Methylimidazol, Dimethylbenzylamin, 1,6-Diazabicyclo-5,4,0-undecen-7, Tris-dimethylaminopropylhexahydrotriazin, Triethylamin, Tris-(dimethylaminomethyl)phenol, Triethylendiamin (Diazabicyclo[2,2,2]octan), Dimethylaminoethanolamin, Dimethylaminopropylamin, N,N-Dimethylaminoethoxyethanol, N,N,N-Trimethylaminoethylethanolamin, Triethanolamin, Diethanolamin, Triisopropanolamin, Diisopropanolamin, Metall-Acetylacetonate, Ammonium-Ethylhexanoate und Metallionen-Ethylhexanoate.

Vorzugsweise findet die Umsetzung zu dem vorstehend beschriebenen organischen Aerogel in Gegenwart eines Lösungsmittels (C) statt.

Als Lösungsmittel (C) kommen die aus dem Stand der Technik bekannten Lösungsmittel für Isocyanat-basierte Polymere in Frage. Bevorzugte Lösungsmittel sind dabei solche, die ein Lösungsmittel für die Komponenten (a1), (a2) und (a3) sind, das heißt solche, die die Bestandteile der Komponenten (a1), (a2) und (a3) unter Reaktionsbedingungen weitgehend vollständig lösen. Bevorzugt ist das Lösungsmittel (C) gegenüber Komponente (a1) inert, das heißt nicht reaktiv.

Als Lösungsmittel (C) kommen beispielsweise Ketone, Aldehyde, Alkylalkanoate, Amide wie Formamid und N-Methylpyrrolidon, Sulfoxide wie Dimethylsulfoxid, aliphatische und cycloaliphatische halogenierte Kohlenwasserstoffe, halogenierte aromatische Verbindungen und fluorhaltige Ether in Betracht. Ebenso in Betracht kommen Mischungen aus zwei oder mehreren der vorgenannten Verbindungen.

Weiterhin kommen Acetale, insbesondere Diethoxymethan, Dimethoxymethan und 1,3-Dioxolan, als Lösungsmittel (C) in Betracht.

Dialkylether und zyklische Ether sind als Lösungsmittel (C) ebenfalls geeignet. Bevorzugte Dialkylether sind insbesondere solche mit 2 bis 6 Kohlenstoffatomen, insbesondere Methyl-Ethylether, Diethylether, Methyl-Propylether, MethylIsopropylether, Propyl-Ethylether, Ethyl-Isopropylether, Dipropylether, Propyl-Isopropylether, Diisopropylether, Methyl-Butylether, Methyl-Isobutylether, Methyl-t-Butylether, Ethyl-n-Butylether, Ethyl-Isobutylether und Ethyl-t-Butylether. Bevorzugte zyklische Ether sind insbesondere Tetrahydrofuran, Dioxan und Tetrahydropyran.

Als Lösungsmittel (C) sind außerdem Alkylalkanoate bevorzugt, insbesondere Methylformiat, Methylacetat, Ethylformiat, Butylacetat und Ethylacetat. Bevorzugte halogenierte Lösungsmittel sind in der WO 00/24799, Seite 4, Zeile 12 bis Seite 5, Zeile 4, beschrieben.

Aldehyde und/oder Ketone sind als Lösungsmittel (C) besonders bevorzugt. Als Lösungsmittel (C) geeignete Aldehyde oder Ketone sind insbesondere solche entsprechend der allgemeinen Formel R²-(CO)-R¹, wobei R¹ und R² Wasserstoff oder Alkylgruppen mit 1,2,3 oder 4 Kohlenstoffatomen sind. Geeignete Aldehyde oder Ketone sind insbesondere Acetaldehyd, Propionaldehyd, n-Butyraldehyd, Isobutyraldehyd, 2-Ethylbutyraldehyd, Valeraldehyd, Isopentaldehyd, 2-Methylpentaldehyd, 2-Ethylhexaldehyde, Acrolein, Methacrolein, Crotonaldehyd, Furfural, Acroleindimer, Methacroelindimer, 1,2,3,6-Tetrahydrobenzaldehyd, 6-Methyl-3-cyclohexenaldehyd, Cyanacetaldehyd, Glyoxynsäureethylester, Benzaldehyd, Aceton, Methylisobutylketon, Diethylketon, Methylethylketon, Methylisobutylketon, Methyl-n-butylketon, Ethylisopropylketon, 2-Acetylfuran, 2-Methoxy-4-methylpentan-2-on, Cyclohexanon und Acetophenon. Die vorgenannten Aldehyde und Ketone können auch in Form von Mischungen eingesetzt werden. Ketone und Aldehyde mit Alkylgruppen mit bis zu drei Kohlenstoffatomen pro Substituent sind als Lösungsmittel (C) bevorzugt. Besonders bevorzugt ist Aceton.

Im Rahmen einer bevorzugten Ausführungsform umfasst die Herstellung der vorstehend beschriebenen organischen Aerogele zumindest folgende Schritte:
(a) Bereitstellen der Komponenten (a1), (a2) und (a3) und des Lösungsmittels (C) wie oben erläutert,
(b) Umsetzung der Komponenten (a1), (a2) und (a3) in Gegenwart des Lösungsmittels (C) zu einem Gel, und
(c) Trocknen des im vorigen Schritt erhaltenen Gels.

Bevorzugte Ausführungsformen der Schritte (a) bis (c) werden im Folgenden näher beschreiben.

Vorzugsweise werden die Komponenten (a1) einerseits und (a2) andererseits getrennt voneinander jeweils in einer geeigneten Teilmenge des Lösungsmittels (C) bereitgestellt. Die getrennte Bereitstellung ermöglicht die optimale Kontrolle beziehungsweise Steuerung der Gelierungsreaktion vor und während des Vermischens.

Besonders bevorzugt wird Komponente (a3) als Mischung mit Komponente (a2), das heißt getrennt von Komponente (a1), bereitgestellt. Dies vermeidet die Reaktion von Wasser mit Komponente (a1) unter Bildung von Netzwerken ohne Anwesenheit der Komponente (a2). Andernfalls führt die Vorabmischung von Wasser mit Komponente (a1) zu weniger günstigen Eigenschaften in Bezug auf die Homogenität der Porenstruktur und die Wärmeleitfähigkeit der resultieren Materialien.

In dieser Ausführungsform erfolgt in Schritt (b) die Umsetzung der Komponenten (a1) und (a2) in Gegenwart des Lösungsmittels (C) zu einem Gel. In Schritt (b) des erfindungsgemäßen Verfahrens wird somit die Komponente (a1) mit Wasser teilweise zu mindestens einem mehrfunktionellen Amin und die mehrfunktionellen Amine mit den mehrfunktionellen Isocyanaten in einer Gelierungsreaktion zu einem Gel umgesetzt.

Um die Umsetzung durchzuführen, sollte vorzugsweise zunächst eine homogene Mischung der in Schritt (a) bereitgestellten Komponenten erzeugt werden.

Das Bereitstellen der im Rahmen von Schritt (a) bereitgestellten Komponenten kann auf übliche Weise erfolgen. Bevorzugt wird dazu ein Rührer oder eine andere Mischvorrichtung eingesetzt, um eine gute und schnelle Durchmischung zu erzielen. Die zur Erzeugung der homogenen Mischung benötigte Zeitdauer sollte klein im Verhältnis zur der Zeitdauer sein, in der die Gelierungsreaktion zu der zumindest teilweisen Ausbildung eines Gels führt, um Mischfehler zu vermeiden. Die sonstigen Mischbedingungen sind in der Regel nicht kritisch, beispielsweise kann man bei 0 bis 100°C und 0,1 bis 10 bar (absolut), insbesondere zum Beispiel bei Raumtemperatur und Atmosphärendruck, mischen. Nach erfolgter Erzeugung einer homogenen Mischung wird die Mischapparatur vorzugsweise abgeschaltet.

Bei der Gelierungsreaktion handelt es sich um eine Polyadditionsreaktion, insbesondere um eine Polyaddition von Isocyanatgruppen und Aminogruppen.

Unter einem Gel soll ein vernetztes System auf Basis eines Polymers verstanden werden, das in Kontakt mit einer Flüssigkeit (sogenanntes Solvogel oder Lyogel bzw. mit Wasser als Flüssigkeit: Aquagel oder Hydrogel) vorliegt. Dabei bildet die Polymerphase ein kontinuierliches räumliches Netzwerk.

Im Rahmen von Schritt (b) des erfindungsgemäßen Verfahrens entsteht das Gel üblicherweise durch Ruhenlassen, zum Beispiel durch einfaches Stehenlassen des Behälters, Reaktionsgefäßes oder Reaktors, in dem sich die Mischung befindet (im folgenden Geliervorrichtung genannt). Bevorzugt wird während des Gelierens (Gelbildung) die Mischung nicht mehr gerührt oder durchmischt, weil dies die Ausbildung des Gels behindern könnte. Es hat sich als vorteilhaft erwiesen, die Mischung während des Gelierens abzudecken bzw. die Geliervorrichtung zu verschließen.

Grundsätzlich kommt eine Trocknung gemäß Schritt (c) unter überkritischen Bedingungen in Betracht, vorzugsweise nach Austausch des Lösungsmittels durch CO₂ oder anderen für Zwecke der überkritischen Trocknung geeigneter Lösungsmittel. Eine derartige Trocknung ist dem Fachmann an sich bekannt. Überkritische Bedingungen kennzeichnen eine Temperatur und einen Druck, bei der die zu entfernende fluide Phase im überkritischen Zustand vorliegt. Hierdurch lässt sich die Schrumpfung des Gelkörpers beim Entfernen des Lösungsmittels reduzieren.

Weiterhin ist es bevorzugt, dass die dünnere Platte (PA) zu mindestens 95 Gew.-%, bevorzugt zu mindestens 99 Gew.-%, besonders bevorzugt zu 100 Gew.-%, aus mindestens einem Aerogel hergestellt ist (bezogen auf das Gesamtgewicht der dünneren Platte (PA)).

Demzufolge ist es ebenfalls bevorzugt, dass die dünnere Platte (PA) (bezogen auf das Gesamtgewicht der dünneren Platte (PA)) Bindemittel und/oder thermoplastische Bestandteile zu maximal 0,5 Gew.-%, mehr bevorzugt zu maximal 0,1 Gew.-% enthält, insbesondere ist die dünnere Platte (PA) vollständig frei von Bindemittel und/oder von thermoplastischen Bestandteilen.

Die dünneren Platten (PA) können prinzipiell beliebige Dichten aufweisen. Vorzugsweise beträgt die Dichte der dünneren Platten (PA) 10 bis 500 g/l, mehr bevorzugt 15 bis 200 g/l, insbesondere 20 bis 150 g/l.

Vorzugsweise weist die dünnere Platte (PA) eine Wärmeleitfähigkeit λ ≤ 0,025 W/(mK), vorzugsweise ≤ 0,022 W/(mK), insbesondere ≤ 0,020 W/(mK), auf. Die Wärmeleitfähigkeit der dünneren Platte (PA) wird vor Herstellung der zumindest zweilagigen Platte nach EN 12667 oder EN 12939 bei einer Mitteltemperatur von 10 ± 0,3 °C bestimmt.

Das Verbinden der dünneren Ausgangsplatten (TS) und (PA) zu der zumindest zweilagigen Platte als solche kann prinzipiell nach beliebigen dem Fachmann bekannten Verfahren durchgeführt werden. Das Verbinden kann beispielsweise in Form von Quellschweißen, Lösungsmittelschweißen, Verkleben und/oder thermischem Verschweißen durchgeführt werden. Vorzugsweise erfolgt im Rahmen der vorliegenden Erfindung das Verbinden der dünneren thermoplastischen Platte (PA) und der dünneren Platte (PA) durch thermisches Verschweißen.

Sofern das Verbinden der jeweiligen Ausgangsplatten (PA) und (TS) durch Verkleben durchgeführt wird, kann die Durchführung des Klebevorgangs bzw. die Auswahl geeigneter Klebstoffe gemäß der Offenbarung der deutschen Patentanmeldung DE 10 2012 023180.6 durchgeführt werden.

Das Verbinden der Ausgangsplatten in Form von thermischem Verschweißen kann ebenfalls nach allen dem Fachmann bekannten Arten durchgebührt werden. Entsprechende Verfahren zum thermischen Verschweißen sind beispielsweise in WO 2015/011016 beschrieben.

Der Effekt des Verschweißens wird bei den zu verschweißenden Oberflächen erzielt, indem die jeweiligen Oberflächen einer Wärmequelle ausgesetzt werden. Die entsprechenden Wärmequellen oder Vorrichtungen sind dem Fachmann bekannt. Vorzugsweise wird das Verschweißen mit einer Vorrichtung ausgewählt aus einem Heizschwert, einem Heizgitter oder einer Heizplatte durchgeführt, wobei die Vorrichtung gegebenenfalls mit Noppen oder Rillen versehen sein kann. Beispielsweise kann das Verschweißen kontinuierlich unter Verwendung eines Heizschwerts durchgeführt werden, ebenso kann ein Spiegelschweißverfahren unter Verwendung einer Heizplatte oder eines Heizgitters durchgeführt werden. Sofern die entsprechende Vorrichtung zum Verschweißen Noppen oder Rillen aufweist, können auf diese Weise auch strukturierte Vertiefungen auf die entsprechende Oberfläche der zu verbindenden Schaumstoffplatten aufgebracht werden. Anstelle der Verwendung einer Vorrichtung wie eines Heizschwerts oder eines Heizgitters ist es auch möglich, das Verschweißen, also die Wärmezufuhr, unter Verwendung von elektromagnetischer Strahlung teilweise oder vollständig durchzuführen.

Durch das thermische Verschweißen bildet sich zwischen den zu verschweißenden Oberflächen (der Ausgangsplatten) eine Schweißnaht aus. Anstelle des Begriffs "Schweißnaht" können auch die Begriffe "Schweißhaut" oder "Schweißzone" verwendet werden. Die Schweißnaht kann in Abhängigkeit des verwendeten Verschweißungsverfahrens prinzipiell eine beliebige Dicke annehmen, vorzugsweise ist die Dicke der Schweißnaht jedoch nicht allzu groß, also nicht größer als 500 µm.

Die im Rahmen der vorliegenden Erfindung für die Dicke einer Schweißnaht aufgeführten Zahlenwerte sind als Durchschnittswerte zu verstehen, wobei vorzugsweise zur Ermittlung eines solchen Durchschnittswerts fünf Messpunkte, die über die gesamte Länge der Schweißnaht verteilt sind und die durch Lichtmikroskopie bestimmt werden, herangezogen werden. Erfindungsgemäß erstrecken sich die vorgenannten Werte hinsichtlich der Schweißnahtdicke über den kompletten Umfang der Schweißnaht.

Im Rahmen der vorliegenden Erfindung ist es weiterhin bevorzugt, dass das Verbinden durch thermisches Verschweißen erfolgt und eine Schweißnaht mit einer Dicke von 30 bis 200 µm, vorzugsweise von 50 bis 150 µm, mehr bevorzugt von 70 bis 130 µm, insbesondere von 80 bis 100 µm, gebildet wird.

Im Rahmen der vorliegenden Erfindung wird beim thermischen Verschweißen mindestens ein Heizelement eingesetzt. Gegebenenfalls können aber auch zwei oder mehrere Heizelemente verwendet werden. Dabei kann es sich um dieselben Heizelemente oder um unterschiedliche Heizelemente handeln. In einer Ausführungsform der vorliegenden Erfindung ist es bevorzugt, dass mindestens zwei Heizelemente verwendet werden. Vorzugsweise werden die Heizelemente auf zueinander parallelen Ebenen eingesetzt. Vorzugsweise erfolgt das thermische Verschweißen als kontaktloses Verschweißen, das heißt, die Oberflächen des Heizelements und die Oberflächen der zu verschweißenden Platten berühren sich nicht. Vorzugsweise erfolgt das thermische Verschweißen als kontaktloses Verschweißen, das heißt, die Oberflächen des Heizelements und die Oberflächen der zu verschweißenden Platten berühren sich nicht.

Weiterhin ist es bevorzugt, dass die Heizelemente Heizplatten sind, vorzugsweise IR-Strahler mit einer Oberflächentemperatur von 200 bis 1 000 °C, insbesondere von 300 bis 700 °C.

In einer bevorzugten Ausführungsform der vorliegenden Erfindung wird das thermische Verschweißen nach einem Verfahren durchgeführt, das die folgenden Schritte a) bis e) umfasst:
a) eine dünnere thermoplastische Schaumstoffplatte (TS) und eine dünnere Platte (PA) werden in einem Abstand a parallel zueinander ausgerichtet, sodass sie einen Zwischenraum ausbilden,
b) in den Zwischenraum werden mindestens zwei Heizelemente auf parallel zueinander versetzten Ebenen und parallel zu den beiden dünneren Platten (TS) und (PA) eingeführt, wobei sich die Oberflächen der beiden dünneren Platten (TS) und (PA) und die Heizelemente nicht gegenseitig berühren,
c) die Heizelemente werden so weit zwischen die beiden dünneren Platten (TS) und (PA) eingeführt, bis zwischen den beiden dünneren Platten (TS) und (PA) bezogen auf jede Stelle der jeweiligen Oberfläche der beiden dünneren Platten (TS) und (PA) zumindest zeitweise sich mindestens eines der Heizelemente befunden hat,
d) die Heizelemente werden vollständig aus dem Zwischenraum wieder entfernt,
e) mindestens eine der beiden dünneren Platten (TS) und (PA) wird gegen die Oberfläche der jeweiligen anderen dünneren Platte (TS) und (PA) gedrückt.

Der Abstand a ist in Schritt a) dabei so gewählt, dass mindestens zwei Heizelemente zwischen den entsprechenden Ausgangsplatten in parallel zueinander versetzten Ebenen so bewegt werden können, dass sie die Oberflächen der entsprechenden Ausgangsplatten nicht berühren (siehe auch Ausführungen zum nachfolgenden Schritt b)). Dabei weisen die Heizelemente auch einen gewissen Abstand zueinander auf, um ein reibungsloses Ein- und Ausführen der Heizelemente zu gewährleisten. Der Abstand a ist umso größer, je höher die Anzahl an Heizelementen im erfindungsgemäßen Verfahren ist, die auf parallel zueinander versetzten Ebenen in den Zwischenraum ein- und aus diesem ausgeführt werden.

Vorzugsweise beträgt in Schritt a) der Abstand a 10 bis 150 mm, insbesondere 15 bis 80 mm.

In Schritt b) dieser Ausführungsform des erfindungsgemäßen Verfahrens werden in den Zwischenraum mindestens zwei Heizelemente auf parallel zueinander versetzten Ebenen und parallel zu den beiden dünneren Schaumstoffplatten eingeführt, wobei sich die Oberflächen der beiden dünneren Schaumstoffplatten und die Heizelemente nicht gegenseitig berühren.

Als Heizelemente können erfindungsgemäß alle dem Fachmann bekannten Heizelemente eingesetzt werden, die beweglich sind und ein kontaktloses Verschweißen im Sinne der vorliegenden Erfindung ermöglichen. Vorzugsweise werden erfindungsgemäß zwei Heizelemente verwendet, weiterhin ist es bevorzugt, dass die Heizelemente Heizplatten sind. Sofern mehr als zwei Heizelemente verwendet werden, ist es bevorzugt, eine gerade Anzahl von Heizelementen auf parallel zueinander versetzten Ebenen einzusetzen. Bevorzugte Heizplatten sind IR-Strahler mit einer Oberflächentemperatur von 200 bis 1 000 °C, insbesondere von 300 bis 700 °C. Sie können beispielsweise in der Außenposition (Ruheposition) vorgeheizt werden oder elektrisch über Widerstandsheizungen oder mittels Wärmeträgerölen erhitzt werden.

Vorzugsweise werden erfindungsgemäß zwei identische Heizelemente, insbesondere Heizplatten, verwendet, gegebenenfalls können die Heizelemente auch hinsichtlich ihrer Beschaffenheit, insbesondere Dicke, unterschiedlich geartet sein. Die Dimensionen der Heizelemente werden in Abstimmung mit den entsprechenden Dimensionen der zu verschweißenden Ausgangsplatten gewählt. Prinzipiell können die Heizelemente sowohl hinsichtlich ihrer Länge (x-Richtung), ihrer Breite (y-Richtung) als auch ihrer Dicke (z-Richtung) jeweils größer und/oder kleiner als die entsprechenden Dimensionierungen der zu verschweißenden Ausgangsplatten sein. Bevorzugt ist, dass die Heizelemente, insbesondere Heizplatten, in ihrer Länge (x-Richtung) jeweils gleich groß oder maximal 35 % größer sind als die entsprechenden Längen (x-Richtung) der zwei dünneren thermoplastischen Schaumstoffplatten und die Heizelemente in ihrer Breite (y-Richtung) 30 bis 140 %, vorzugsweise 60 bis 120 %, der entsprechenden Breite (y-Richtung) der zwei dünneren Schaumstoffplatten betragen.

Im Rahmen dieser Ausführungsform werden vorzugsweise in Schritt b) zwei Heizelemente aus jeweils zueinander entgegengesetzten Richtungen in den Zwischenraum eingeführt und/oder es werden vorzugsweise zwei Heizelemente in Schritt d) in jeweils zueinander entgegengesetzten Richtungen aus dem Zwischenraum wieder entfernt.

Prinzipiell ist es denkbar, dass beide Ausgangsplatten in Schritt e) gegeneinander gedrückt werden, also so lange aufeinander zu bewegt werden, bis der Abstand a gleich null ist. Vorzugsweise wird erfindungsgemäß aber nur eine der beiden Ausgangsplatten gegen die jeweils andere Ausgangsplatte gedrückt. Bei einer bezogen auf die Räumlichkeit horizontalen Anordnung der Ausgangsplatten ist es bevorzugt, dass die räumlich gesehen obere Ausgangsplatte gegen die untere Ausgangsplatte gedrückt wird. Dies erfolgt vorzugsweise unter Verwendung einer entsprechenden Greifvorrichtung, mit der die Ausgangsplatten sowohl angehoben als auch unter Anwendung von Druck gegen die unteren Platten verschoben werden können. Die unteren Ausgangsplatten können auch auf einer Senkvorrichtung aufliegen, die bei der Herstellung von höherlagigen Schaumstoffplatten entsprechend nach unten bewegt werden kann. Vorzugsweise wird die Senkvorrichtung aber während der Durchführung der erfindungsgemäßen Schritte a) bis e) nicht bewegt. Ein Absenken der Senkvorrichtung erfolgt vorzugsweise erst vor der Wiederholung der Schritte a) bis e), um eine drei- oder höherlagige Schaumstoffplatte herzustellen.

Weiterhin ist es bevorzugt, dass in dieser Ausführungsform des erfindungsgemäßen Verfahrens im Rahmen von Schritt e) ein Verpressen der thermisch zu verschweißenden zusammengefügten dünnen Schaumstoffplatten durchgeführt wird. Das Verpressen erfolgt im Allgemeinen im Sekunden- bis Minutenbereich und/oder bei einem Pressdruck von 0,01 bis 0,5 bar, vorzugsweise von 0,1 bis 0,5 bar.

Weiterhin ist es im Rahmen der vorstehenden Ausführungsform bevorzugt, dass das Verbinden durch thermisches Verschweißen erfolgt und
i) eine Schweißnaht mit einer Dicke von 30 bis 200 µm, vorzugsweise von 50 bis 150 µm, mehr bevorzugt von 70 bis 130 µm, insbesondere von 80 bis 100 µm, gebildet wird, und/oder
ii) zwei Heizelemente verwendet werden und/oder die Heizelemente Heizplatten sind, vorzugsweise IR-Strahler mit einer Oberflächentemperatur von 200 bis 1 000 °C, insbesondere von 300 bis 700 °C, und/oder
iii) die Heizelemente in den Schritten b) und d) mit einer Geschwindigkeit von 0,1 bis 5 m/s, vorzugsweise von 0,3 bis 3 m/s, bewegt werden, und/oder
iv) in Schritt b) zwei Heizelemente aus jeweils zueinander entgegengesetzten Richtungen in den Zwischenraum eingeführt werden und zwei Heizelemente in Schritt d) in jeweils zueinander entgegengesetzten Richtungen aus dem Zwischenraum wieder entfernt werden, und/oder
v) die Gesamtdauer der Schritte b) bis e) maximal 20 Sekunden, vorzugsweise maximal 10 Sekunden, insbesondere maximal 5 Sekunden, beträgt.

Ein weiterer Gegenstand der vorliegenden Erfindung ist eine zumindest zweilagige Platte, erhältlich nach dem vorstehend beschriebenen Verfahren.

Ein weiterer Gegenstand der vorliegenden Erfindung ist die Verwendung einer solchen zumindest zweilagigen Platte zur Wärmedämmung.

Nachfolgend wird die vorliegende Erfindung anhand von Beispielen näher erläutert.

### Beispiele

In den nachfolgenden Beispielen werden die zumindest zweilagigen Platten durch thermisches Verschweißen hergestellt. Das thermische Verschweißen wird in einer Verschweißungsanlage durchgeführt, die sinngemäß in WO 2015/011016 in den dortigen Versuchen verwendet worden ist. Die in den vorliegenden Beispielen eingesetzte Verschweißungsanlage umfasst somit Aufnahmeplatten, die die zu verschweißenden Ausgangsplatten (dünnere thermoplastische Schaumstoffplatte (TS) sowie dünnere Platte (PA)) in Abmessungen bis 1 300 x 660 mm aufnehmen können. Die Aufnahmeplatten und das zu verschweißende Material sind vertikal angeordnet. Soweit im nachfolgenden Text nicht anders ausgeführt, sind in den vorliegenden Beispielen die entsprechenden Parameter gemäß den Versuchen von WO 2015/011016 verwendet worden.

Die zu verschweißenden Ausgangsplatten, also mindestens eine dünnere thermoplastische Schaumstoffplatte (TS) und mindestens eine dünnere Platte (PA), haben jeweils die folgenden Dimensionen:

| | |
|---|---|
| Länge (x-Richtung): | 1 000 mm |
| Breite (y-Richtung): | 500 mm |
| Dicke (z-Richtung): | Die jeweiligen Werte sind in den nachfolgenden Tabellen 1 und 2 für die einzelnen Beispiele angegeben. |

Das thermische Verschweißen wird so durchgeführt, dass erfindungsgemäß in der zumindest zweilagigen Platte nach dem Verschweißungsvorgang jeweils eine flächenmäßig gleichgroße Seite, die von der dünneren thermoplastischen Schaumstoffplatte (TS) bzw. von der dünneren Platte (PA) stammt, miteinander verbunden werden. Die jeweiligen Seiten der entsprechenden Ausgangsplatten haben genau die gleichen Dimensionen, es handelt sich somit um eine der beiden flächenmäßig größten Seiten der jeweiligen Ausgangsplatten, die durch die x-Richtung und die y-Richtung definiert werden.

Zwei Heizelemente der Abmessung 1 320 und 680 mm werden auf die gewünschte Schweißtemperatur aufgeheizt. Das Aufheizen geschieht kontaktlos durch IR-Strahler, kann aber auch durch induktive Beheizung erfolgen.

Von den Heizstationen werden die Heizelemente in den Zwischenraum zwischen die zu verschweißenden Platten (Ausgangsplatten (PA) und (TS)) bewegt. Dabei werden die Heizelemente zunächst beschleunigt und dann wieder abgebremst, so dass die Heizelemente mittig vor den zu verschweißenden Platten stehen bleiben. Dort bleiben die Heizelemente für eine definierte Heizzeit stehen.

Am Ende der Heizzeit werden die Heizelemente wieder beschleunigt und verlassen den Zwischenraum zwischen den zu verschweißenden Platten. Genauere Informationen in diesem Zusammenhang können den Tabellen 1 und 2 entnommen werden.

Sobald die Heizelemente den Zwischenraum zwischen den zu verschweißenden Platten verlassen haben, werden diese zusammengepresst. Dabei bewegen sich beide Aufnahmeplatten aufeinander zu und pressen die zu verschweißenden Platten mit einem definierten Anpressdruck zusammen.

Bei den in Tabelle 1 aufgeführten Beispielen 1 bis 3 wird der vorgenannte Verschweißungsvorgang einfach durchgeführt, wobei dadurch eine genau zweilagige dünnere Platte erhalten wird. Im Gegensatz dazu wird bei den in Tabelle 2 aufgeführten Beispielen 4 bis 6 eine genau dreilagige Platte erhalten. Bei diesen Beispielen wird der vorstehend beschriebene Verschweißungsvorgang zweimal durchgeführt. In anderen Worten ausgedrückt, wird bei den in Tabelle 2 aufgeführten Beispielen eine zweite dünnere thermoplastische Schaumstoffplatte (TS) auf die nach dem ersten Verschweißungsvorgang erhaltene zumindest zweilagige Platte aufgeschweißt.

### Herstellung einer zweilagigen Platte

Es werden folgende dünnere Ausgangsplatten eingesetzt:
a) thermoplastische Platten (TS) und
b) Aerogel-Platten (PS)

Sofern als thermoplastische Ausgangsplatte a) Styrodur eingesetzt wird, wird bei diesen Ausgangsplatten vor dem Durchführen des thermischen Verschweißens an den zu verschweißenden Flächen die Schäumhaut durch Fräsen entfernt.

Es werden folgende dünnere Ausgangsplatten eingesetzt:
a) thermoplastische Platten (TS) und
b) Aerogel-Platten (PS)

### Beispiel 1

a) Neopor:
   Dichte 15 g/l; Platten geschäumt aus Neopor (2200 BASF SE; λ = 32 mW/(mK), mittlere Zellgröße 120 µm)
b) Platte aus anorganischem Aerogel (Slentex der BASF SE):
   λ = 19 mW/(mK); mittlere Zellgröße < 200 nm

### Beispiel 2

a) Neopor:
   Dichte 15 g/l; Platten geschäumt aus Neopor (2200 BASF SE, λ = 32 mW/(mK), mittlere Zellgröße 120 µm)
b) Platte aus organischem Aerogel (Slentite der BASF SE):
   λ = 17 mW/(mK); mittlere Zellgröße < 200 nm

### Beispiel 3

a) Styrodur:
   Dichte 32 g/l; λ = 32 mW/(mK); mittlere Zellgröße 100 µm
b) Platte aus organischem Aerogel (Slentite der BASF SE):
   λ = 17 mW/(mK); mittlere Zellgröße < 200 nm

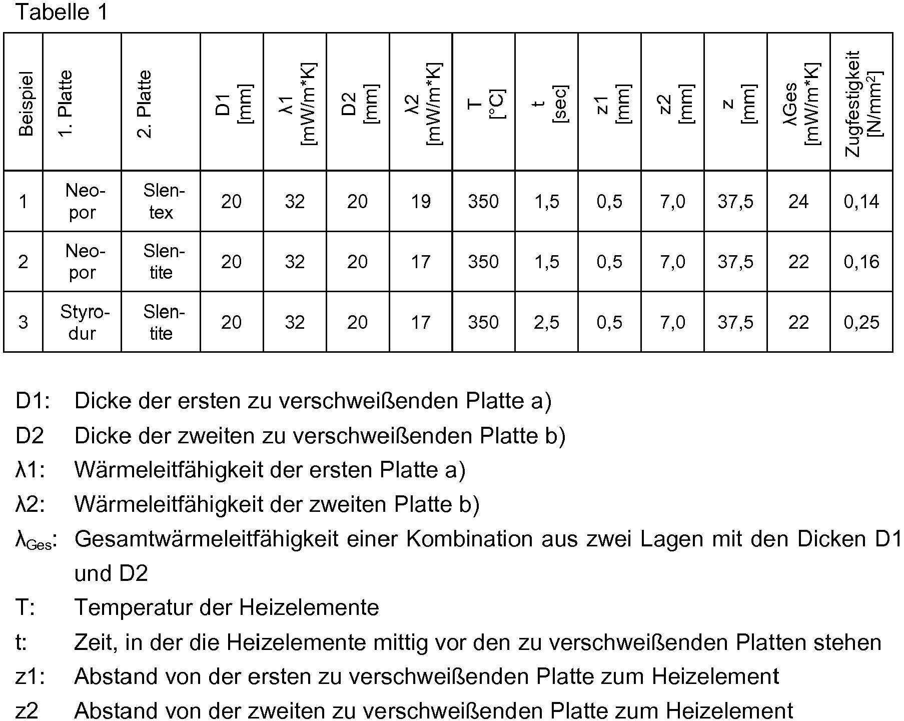

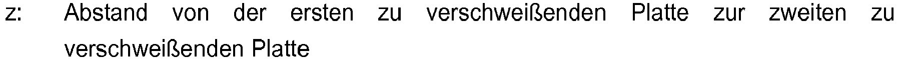

Durch zweifaches Ausführen des Schweißvorgangs gemäß Tabelle 1 werden folgende Kombinationen von dreilagigen Platten hergestellt:

| | | | | |
|---|---|---|---|---|
| Neopor | - | Slentex | - | Neopor |
| Neopor | - | Slentite | - | Neopor |
| Styrodur | - | Slentite | - | Styrodur |

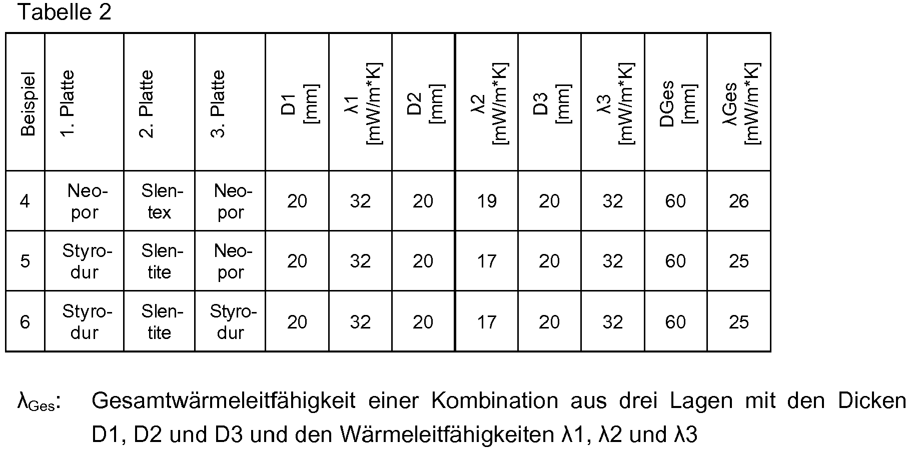

## Patentansprüche

1. Verfahren zur Herstellung einer zumindest zweilagigen Platte durch Verbinden von mindestens einer dünneren thermoplastischen Schaumstoffplatte (TS) und mindestens einer dünneren Platte (PA), wobei die dünnere Platte (PA) aus einem Material mit einem mittleren Zelldurchmesser ≤ 1000 nm hergestellt ist.

2. Verfahren gemäß Anspruch 1, **dadurch gekennzeichnet, dass** das Verbinden der dünneren thermoplastischen Schaumstoffplatte (TS) und der dünneren Platte (PA) durch thermisches Verschweißen erfolgt.

3. Verfahren gemäß Anspruch 1 oder 2, **dadurch gekennzeichnet, dass** in der dünneren Platte (PA) das Material mit einem mittleren Zelldurchmesser ≤ 1000 nm mindestens ein Aerogel und/oder mindestens ein Xerogel, vorzugsweise mindestens ein Aerogel, ist.

4. Verfahren gemäß einem der Ansprüche 1 bis 3, **dadurch gekennzeichnet, dass**
i) die dünnere Platte (PA) zu mindestens 95 Gew.-%, bevorzugt zu mindestens 99 Gew.-%, besonders bevorzugt zu 100 Gew.-%, aus mindestens einem Aerogel hergestellt ist (bezogen auf das Gesamtgewicht der dünneren Platte (PA)), und/oder
ii) die dünnere Platte (PA) (bezogen auf das Gesamtgewicht der dünneren Platte (PA)) Bindemittel und/oder thermoplastische Bestandteile zu maximal 0,5 Gew.-%, mehr bevorzugt zu maximal 0,1 Gew.-% enthält, insbeondere ist die dünnere Platte (PA) vollständig frei von Bindemittel und/oder von thermoplastischen Bestandteilen, und/oder
iii) die dünnere thermoplastische Schaumstoffplatte (TS) zu mindestens 90 Gew.-%, bevorzugt zu mindestens 95 Gew.-%, besonders bevorzugt zu 100 Gew.-%, aus mindestens einem Thermoplasten hergestellt ist (bezogen auf das Gesamtgewicht der dünneren thermoplastischen Schaumstoffplatte (TS)), und/oder
iv) die dünnere thermoplastische Schaumstoffplatte (TS) (bezogen auf das Gesamtgewicht der dünneren thermoplastischen Schaumstoffplatte (TS)) Bindemittel und/oder Material mit einem mittleren Zelldurchmesser ≤ 1000 nm, insbesondere Aerogele, zu maximal 0,5 Gew.-%, mehr bevorzugt zu maximal 0,1 Gew.-% enthält, besonders bevorzugt ist die dünnere thermoplastische Schaumstoffplatte (TS) vollständig frei von Bindemittel und/oder Material mit einem mittleren Zelldurchmesser ≤ 1000 nm, insbesondere Aerogel.

5. Verfahren gemäß einem der Ansprüche 1 bis 4, **dadurch gekennzeichnet, dass**
i) die dünnere Platte (PA) aus einem Material mit einem mittleren Zelldurchmesser ≤ 500 nm, vorzugsweise ≤ 250 nm, hergestellt ist, und/oder
ii) dass die dünnere thermoplastische Schaumstoffplatte (TS) einen mittleren Zelldurchmesser ≥ 10 µm, vorzugsweise ≥ 50 µm und besonders bevorzugt ≥ 100 µm aufweist.

6. Verfahren gemäß einem der Ansprüche 1 bis 5, **dadurch gekennzeichnet, dass**
i) die dünnere Platte (PA) eine Wärmeleitfähigkeit λ ≤ 0,025 W/(mK), vorzugsweise ≤ 0,022 W/(mK), insbesondere ≤ 0,020 W/(mK), aufweist, und/oder
ii) die zumindest zweilagige Platte eine Wärmeleitfähigkeit λ ≤ 0,030 W/(mK), vorzugsweise ≤ 0,025 W/(mK), insbesondere ≤ 0,020 W/(mK), aufweist.

7. Verfahren gemäß einem der Ansprüche 1 bis 6, **dadurch gekennzeichnet, dass** eine dreilagige Platte hergestellt wird durch Verbindung von zwei dünneren thermoplastischen Schaumstoffplatten (TS) und einer dünneren Platte (PA), wobei jeweils eine dünnere thermoplastische Schaumstoffplatte (TS) auf jeweils einer sich gegenüberliegenden Seite der dünneren Platte (PA) unter Erhalt der dreilagigen Platte aufgebracht wird.

8. Verfahren gemäß Anspruch 7, **dadurch gekennzeichnet, dass** eine vier- oder höherlagige Platte hergestellt wird, wobei ausgehend von der dreilagigen Platte eine zweite dünnere Platte (PA) auf eine von einer dünneren thermoplastischen Schaumstoffplatte (TS) stammenden Seite der dreilagigen Platte aufgebracht wird, die daraus erhaltene vierlagige Platte abwechselnd insgesamt vier Lagen aus dünneren thermoplastischen Schaumstoffplatten (TS) und dünneren Platten (PA) aufweist und die erste und zweite dünnere Platte (PA) sich auf jeweils einer gegenüberliegenden Seite einer dünneren thermoplastischen Schaumstoffplatte (TS) befinden, wobei gegebenenfalls zum Erhalt von höherlagigen Platten das abwechselnde Aufbringen einer weiteren dünneren thermoplastischen Schaumstoffplatte (TS) oder einer dünneren Platte (PA) mindestens einfach wiederholt wird.

9. Verfahren gemäß einem der Ansprüche 1 bis 8, **dadurch gekennzeichnet, dass** eine zumindest zweilagige Platte durch thermisches Verschweißen hergestellt wird, umfassend die folgenden Schritte a) bis e):
a) eine dünnere thermoplastische Schaumstoffplatte (TS) und eine dünnere Platte (PA) werden in einem Abstand a parallel zueinander ausgerichtet, sodass sie einen Zwischenraum ausbilden,
b) in den Zwischenraum werden mindestens zwei Heizelemente auf parallel zueinander versetzten Ebenen und parallel zu den beiden dünneren Platten (TS) und (PA) eingeführt, wobei sich die Oberflächen der beiden dünneren Platten (TS) und (PA) und die Heizelemente nicht gegenseitig berühren,
c) die Heizelemente werden so weit zwischen die beiden dünneren Platten (TS) und (PA) eingeführt, bis zwischen den beiden dünneren Platten (TS) und (PA) bezogen auf jede Stelle der jeweiligen Oberfläche der beiden dünneren Platten (TS) und (PA) zumindest zeitweise sich mindestens eines der Heizelemente befunden hat,
d) die Heizelemente werden vollständig aus dem Zwischenraum wieder entfernt,
e) mindestens eine der beiden dünneren Platten (TS) und (PA) wird gegen die Oberfläche der jeweiligen anderen dünneren Platte (TS) und (PA) gedrückt,
wobei vorzugsweise in Schritt b) zwei Heizelemente aus jeweils zueinander entgegengesetzten Richtungen in den Zwischenraum eingeführt werden und/oder vorzugsweise zwei Heizelemente in Schritt d) in jeweils zueinander entgegengesetzten Richtungen aus dem Zwischenraum wieder entfernt werden.

10. Verfahren gemäß einem der Ansprüche 1 bis 9, **dadurch gekennzeichnet, dass**
i) die dünnere thermoplastische Schaumstoffplatte (TS) ein Partikelschaumstoff oder ein Extrusionsschaumstoff ist auf Basis mindestens eines Polymers, ausgewählt aus der Gruppe bestehend aus Polystyrol, Polystyrolcopolymeren, Polyethersulfon, Polysulfon, Polyethylenterephthalat, thermoplastischem Polyurethan, Polyolefinen, Polyolefincopolymeren und Acrylpolymeren, vorzugsweise ein Partikelschaumstoff oder Extrusionsschaumstoff auf Basis mindestens eines Polymers, ausgewählt aus der Gruppe bestehend aus Polystyrol, Polystyrolcopolymeren, Polyethersulfon, Polysulfon, thermoplastischem Polyurethan und Polyethylenterephthalat, am meisten bevorzugt ein Partikelschaumstoff oder Extrusionsschaumstoff auf Basis mindestens eines Polymers, ausgewählt aus der Gruppe bestehend aus Polystyrol, Polystyrolcopolymeren, Polyethersulfon und Polyethylenterephthalat, und/oder
ii) die dünnere Platte (PA) aus mindestens einem anorganischen oder organischen Aerogel hergestellt ist.

11. Verfahren gemäß Anspruch 10, **dadurch gekennzeichnet, dass**
i) das Aerogel ein anorganisches Aerogel auf Basis von Metalloxiden ist, vorzugsweise auf Basis von mindestens einem Oxid von Silicium, Aluminium oder Titanium, insbesondere auf Basis von mindestens einem Oxid von Silicium (Silicat), und/oder
ii) das Aerogel ein organisches Aeorgel auf Basis von Isocyanaten ist, vorzugsweise mindestens ein organisches Aerogel, das hergestellt wird durch Umsetzung der folgenden Komponenten (a1) bis (a3):
(a1) mindestens ein mehrfunktionelles Isocyanat, und
(a2) mindestens ein mehrfunktionelles substituiertes aromatisches Amin (a2-s) gemäß der allgemeinen Formel I 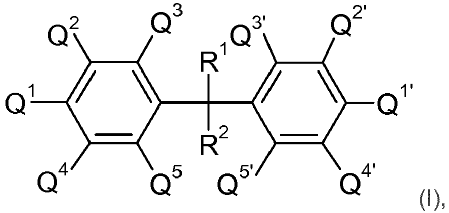 wobei R¹ und R² gleich oder unterschiedlich sein können und unabhängig voneinander ausgewählt werden aus Wasserstoff und linearen oder verzweigten Alkylgruppen mit von 1 bis 6 Kohlenstoffatomen und wobei sämtliche Substituenten Q¹ bis Q⁵ und Q^{1'} bis Q^{5'} gleich oder unterschiedlich sind und unabhängig voneinander ausgewählt werden aus Wasserstoff, einer primären Aminogruppe und einer linearen oder verzweigten Alkylgruppe mit von 1 bis 12 Kohlenstoffatomen, wobei die Alkylgruppe weitere funktionelle Gruppen tragen kann, unter der Voraussetzung, dass
- die Verbindung gemäß der allgemeinen Formel I mindestens zwei primäre Aminogruppen umfasst, wobei zumindest eines aus Q¹, Q³ und Q⁵ eine primäre Aminogruppe ist und zumindest eines aus Q^{1'}, Q^{3'} und Q^{5'} eine primäre Aminogruppe ist und
- Q², Q⁴, Q^{2'} und Q^{4'} so gewählt werden, dass die Verbindung gemäß der allgemeinen Formel I mindestens eine lineare oder verzweigte Alkylgruppe, die weitere funktionelle Gruppen tragen kann, mit von 1 bis 12 Kohlenstoffatomen in α-Position zu mindestens einer an den aromatischen Kern gebundenen primären Aminogruppe aufweist,
und optional mindestens ein weiteres mehrfunktionelles aromatisches Amin (a2-u), welches sich von den Aminen (a2-s) gemäß der allgemeinen Formel I unterscheidet, und
(a3) Wasser,
vorzugsweise erfolgt die Umsetzung in Gegenwart eines Lösungsmittels (C) und optional in Gegenwart mindestens eines Katalysators (a4).

12. Verfahren gemäß einem der Ansprüche 1 bis 11, **dadurch gekennzeichnet, dass** das Verbinden durch thermisches Verschweißen erfolgt und
i) eine Schweißnaht mit einer Dicke von 30 bis 200 µm, vorzugsweise von 50 bis 150 µm, mehr bevorzugt von 70 bis 130 µm, insbesondere von 80 bis 100 µm, gebildet wird, und/oder
ii) zwei Heizelemente verwendet werden und/oder die Heizelemente Heizplatten sind, vorzugsweise IR-Strahler mit einer Oberflächentemperatur von 200 bis 1000 °C, insbesondere von 300 bis 700 °C, und/oder
iii) die Heizelemente in den Schritten b) und d) gemäß Anspruch 9 mit einer Geschwindigkeit von 0,1 bis 5 m/s, vorzugsweise von 0,3 bis 3 m/s, bewegt werden, und/oder
iv) in Schritt b) gemäß Anspruch 9 zwei Heizelemente aus jeweils zueinander entgegengesetzten Richtungen in den Zwischenraum eingeführt werden und zwei Heizelemente in Schritt d) in jeweils zueinander entgegengesetzten Richtungen aus dem Zwischenraum wieder entfernt werden, und/oder
v) die Gesamtdauer der Schritte b) bis e) gemäß Anspruch 9 maximal 20 Sekunden, vorzugsweise maximal 10 Sekunden, insbesondere maximal 5 Sekunden, beträgt.

13. Verfahren gemäß einem der Ansprüche 1 bis 12, **dadurch gekennzeichnet, dass**
i) die mindestens eine dünnere thermoplastische Schaumstoffplatte (TS) eine Länge (x-Richtung) von 500 bis 2800 mm, vorzugsweise von 1000 bis 1500 mm, eine Breite (y-Richtung) von 200 bis 1250 mm, vorzugsweise von 500 bis 900 mm, und eine Dicke (z-Richtung) von 2 bis 100 mm, vorzugsweise von 5 bis 50 mm, aufweist, und/oder
ii) die mindestens eine dünnere Platte (PA) eine Länge (x-Richtung) von 500 bis 2800 mm, vorzugsweise von 1000 bis 1500 mm, eine Breite (y-Richtung) von 200 bis 1250 mm, vorzugsweise von 500 bis 900 mm, und eine Dicke (z-Richtung) von 10 bis 200 mm, vorzugsweise von 20 bis 100 mm, aufweist, und/oder
iii) jede dünnere thermoplastishe Schaumstoffplatte (TS) und jede dünnere Platte (PA) identische Werte für die Länge (x-Richtung) und die Breite (y-Richtung) aufweisen, und/oder
iv) die mindestens eine dünnere thermoplastische Schaumstoffplatte (TS) und die mindestens eine dünnere Platte (PA) über jeweils eine der beiden flächenmäßig größten Seiten (xy-Ebene) der entsprechenden Platte miteinander verbunden werden, besonders bevorzugt weisen die miteinander zu verbindenden Platten identische Länge- und Breitedimensionen auf.

14. Zumindest zweilagige Platte erhältlich nach einem Verfahren gemäß einem der Ansprüche 1 bis 13.

15. Verwendung einer zumindest zweilagigen Platte gemäß Anspruch 14 zur Wärmedämmung.

## Claims

1. A process for the production of an at least two-layer sheet via adhesive bonding of at least one thinner thermoplastic foam sheet (TS) and of at least one thinner sheet (PA), where the thinner sheet (PA) has been produced from a material with average cell diameter ≤ 1000 nm.

2. The process according to claim 1, wherein the adhesive bonding of the thinner thermoplastic foam sheet (TS) and of the thinner sheet (PA) is achieved via thermal welding.

3. The process according to claim 1 or 2, wherein in the thinner sheet (PA) the material with average cell diameter ≤ 1000 nm is at least one aerogel and/or at least one xerogel, preferably at least one aerogel.

4. The process according to any of claims 1 to 3, wherein
i) the thinner sheet (PA) has been produced to an extent of at least 95% by weight, preferably to an extent of at least 99% by weight, particularly preferably to an extent (based on the total weight of the thinner sheet (PA)) of 100% by weight, from at least one aerogel, and/or
ii) the thinner sheet (PA) comprises (based on the total weight of the thinner sheet (PA)) at most 0.5% by weight of binder and/or thermoplastic constituents, more preferably at most 0.1% by weight, and in particular the thinner sheet (PA) is completely free from binder and/or from thermoplastic constituents, and/or
iii) the thinner thermoplastic foam sheet (TS) has been produced to an extent (based on the total weight of the thinner thermoplastic foam sheet (TS)) of at least 90% by weight, preferably to an extent of at least 95% by weight, particularly preferably to an extent of 100% by weight, from at least one thermoplastic, and/or
iv) the thinner thermoplastic foam sheet (TS) comprises (based on the total weight of the thinner thermoplastic foam sheet (TS)) at most 0.5% by weight of binder and/or material with average cell diameter ≤ 1000 nm, in particular aerogels, more preferably at most 0.1% by weight, and particularly preferably the thinner thermoplastic foam sheet (TS) is completely free from binder and/or material with average cell diameter ≤ 1000 nm, in particular aerogel.

5. The process according to any of claims 1 to 4, wherein
i) the thinner sheet (PA) has been produced from a material with average cell diameter ≤ 500 nm, preferably ≤ 250 nm, and/or
ii) the average cell diameter of the thinner thermoplastic film sheet (TS) is ≥ 10 µm, preferably ≥ 50 µm and particularly preferably ≥ 100 µm.

6. The process according to any of claims 1 to 5, wherein
i) the thermal conductivity λ of the thinner sheet (PA) is ≤ 0.025 W/(mK), preferably ≤ 0.022 W/(mK), in particular ≤ 0.020 W/(mK), and/or
ii) the thermal conductivity λ of the at least two-layer sheet is ≤ 0.030 W/(mK), preferably ≤ 0.025 W/(mK), in particular ≤ 0.020 W/(mK).

7. The process according to any of claims 1 to 6, wherein a three-layer sheet is produced by adhesive bonding of two thinner thermoplastic foam sheets (TS) and of a thinner sheet (PA), where a thinner thermoplastic foam sheet (TS) is applied to each opposite side of the thinner sheet (PA) to give the three-layer sheet.

8. The process according to claim 7, wherein a sheet having four or more layers is produced, where, starting from the three-layer sheet, a second thinner sheet (PA) is applied to a side deriving from a thinner thermoplastic foam sheet (TS) in the three-layer sheet, the resultant four-layer sheet has, in alternation, a total of four layers made of thinner thermoplastic foam sheets (TS) and of thinner sheets (PA), and the location of the first and second thinner sheet (PA) is respectively on an opposite side of a thinner thermoplastic foam sheet (TS), and where optionally in order to obtain sheets having a larger number of layers the alternating application of a further thinner thermoplastic foam sheet (TS) or of a thinner sheet (PA) is repeated at least once.

9. The process according to any of claims 1 to 8, wherein an at least two-layer sheet is produced by thermal welding, comprising the following steps a) to e):
a) a thinner thermoplastic foam sheet (TS) and a thinner sheet (PA) are oriented parallel to one another at a distance a from one another, thus forming an intervening space,
b) at least two heating elements are introduced along mutually parallel offset planes into the intervening space in a manner that is parallel to the two thinner sheets (TS) and (PA), there being no contact between the surfaces of the two thinner sheets (TS) and (PA) and the heating elements,
c) the heating elements are introduced between the two thinner sheets (TS) and (PA) to an extent such that, in relation to each location on the respective surface of the two thinner sheets (TS) and (PA) at least one of the heating elements has been present at least temporarily between the two thinner sheets (TS) and (PA),
d) the heating elements are then removed entirely from the intervening space,
e) at least one of the two thinner sheets (TS) and (PA) is pressed against the surface of the respective other thinner sheet (TS) or (PA),
it being preferable here in step b) that two heating elements are introduced from respectively mutually opposite directions into the intervening space, and/or that in step d) preferably two heating elements are then removed in respectively mutually opposite directions from the intervening space.

10. The process according to any of claims 1 to 9, wherein
i) the thinner thermoplastic film sheet (TS) is a molded foam or an extruded foam based on at least one polymer selected from the group consisting of polystyrene, polystyrene copolymers, polyethersulfone, polysulfone, polyethylene terephthalate, thermoplastic polyurethane, polyolefins, polyolefin copolymers and acrylic polymers, preferably a molded foam or extruded foam based on at least one polymer selected from the group consisting of polystyrene, polystyrene copolymers, polyethersulfone, polysulfone, thermoplastic polyurethane and polyethylene terephthalate, most preferably a molded foam or extruded foam based on at least one polymer selected from the group consisting of polystyrene, polystyrene copolymers, polyethersulfone and polyethylene terephthalate, and/or
ii) the thinner sheet (PA) has been produced from at least one inorganic or organic aerogel.

11. The process according to claim 10, wherein
i) the aerogel is an inorganic aerogel based on metal oxides, preferably based on at least one oxide of silicon, aluminum or titanium, in particular based on at least one oxide of silicon (silicate), and/or
ii) the aerogel is an organic aerogel based on isocyanates, preferably at least one organic aerogel which is produced by reaction of the following components (a1) to (a3):
(a1) at least one polyfunctional isocyanate, and
(a2) at least one polyfunctional substituted aromatic amine (a2-s) of the general formula I 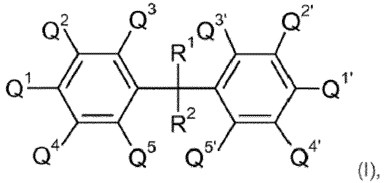 where R¹ and R² can be identical or different and are mutually independently selected from hydrogen and linear or branched alkyl groups having from 1 to 6 carbon atoms, and where all of the substituents Q¹ to Q⁵ and Q^{1'} to Q^{5'} are identical or different and are mutually independently selected from hydrogen, a primary amino group and a linear or branched alkyl group having from 1 to 12 carbon atoms, where the alkyl group can bear further functional groups, with the proviso that
- the compound of the general formula I comprises at least two primary amino groups, where at least one of Q¹, Q³ and Q⁵ is a primary amino group and at least one of Q^{1'}, Q^{3'} and Q^{5'} is a primary amino group, and
- Q², Q⁴, Q^{2'} and Q^{4'} are selected in a manner such that the compound of the general formula I has at least one linear or branched alkyl group, which can bear further functional groups, having from 1 to 12 carbon atoms in α-position in relation to at least one primary amino group bonded to the aromatic ring,
and optionally at least one further polyfunctional aromatic amine (a2-u) which differs from the amines (a2-s) of the general formula I, and
(a3) water,
the reaction preferably takes place in the presence of a solvent (C) and optionally in the presence of at least one catalyst (a4).

12. The process according to any of claims 1 to 11, wherein the adhesive bonding is achieved by thermal welding and
i) a weld is formed with thickness from 30 to 200 µm, preferably from 50 to 150 µm, more preferably from 70 to 130 µm, in particular from 80 to 100 µm, and/or
ii) two heating elements are used and/or the heating elements are heating plates, preferably IR sources with surface temperature from 200 to 1000°C, in particular from 300 to 700°C, and/or
iii) the heating elements in the steps b) and d) according to claim 9 are moved with a velocity of from 0.1 to 5 m/s, preferably from 0.3 to 3 m/s, and/or
iv) in step b) according to claim 9, two heating elements are introduced from respectively mutually opposite directions into the intervening space, and in step d) two heating elements are then removed in respectively mutually opposite directions from the intervening space, and/or
v) the total duration of the steps b) to e) according to claim 9 is at most 20 seconds, preferably at most 10 seconds, in particular at most 5 seconds.

13. The process according to any of claims 1 to 12, wherein
i) the length (x-direction) of the at least one thinner thermoplastic foam sheet (TS) is from 500 to 2800 mm, preferably from 1000 to 1500 mm, its width (y-direction) is from 200 to 1250 mm, preferably from 500 to 900 mm, and its thickness (z-direction) is from 2 to 100 mm, preferably from 5 to 50 mm, and/or
ii) the length (x-direction) of the at least one thinner sheet (PA) is from 500 to 2800 mm, preferably from 1000 to 1500 mm, its width (y-direction) is from 200 to 1250 mm, preferably from 500 to 900 mm, and its thickness (z-direction) is from 10 to 200 mm, preferably from 20 to 100 mm, and/or
iii) each thinner thermoplastic foam sheet (TS) and each thinner sheet (PA) exhibits identical values for length (x-direction) and width (y-direction), and/or
iv) the at least one thinner thermoplastic foam sheet (TS) and the at least one thinner sheet (PA) are adhesively bonded to one another by way of respectively one of the two largest-area sides (xy-plane) of the corresponding sheet; it is particularly preferable that the sheets to be bonded to one another have identical length dimensions and identical width dimensions.

14. An at least two-layer sheet obtainable by a process according to any one of claims 1 to 13.

15. The use of an at least two-layer sheet according to claim 14 for thermal insulation.

## Revendications

1. Procédé de fabrication d'une plaque au moins bicouche par liaison d'au moins une plaque de mousse thermoplastique plus mince (TS) et d'au moins une plaque plus mince (PA), la plaque plus mince (PA) étant fabriquée en un matériau ayant un diamètre cellulaire moyen ≤ 1 000 nm.

2. Procédé selon la revendication 1, **caractérisé en ce que** la liaison de la plaque de mousse thermoplastique plus mince (TS) et de la plaque plus mince (PA) a lieu par soudage thermique.

3. Procédé selon la revendication 1 ou 2, **caractérisé en ce que** le matériau ayant un diamètre cellulaire moyen ≤ 1 000 nm dans la plaque plus mince (PA) est au moins un aérogel et/ou au moins un xérogel, de préférence au moins un aérogel.

4. Procédé selon l'une quelconque des revendications 1 à 3, **caractérisé en ce que**
i) la plaque plus mince (PA) est fabriquée à hauteur d'au moins 95 % en poids, de préférence à hauteur d'au moins 99 % en poids, de manière particulièrement préférée à hauteur de 100 % en poids, à partir d'au moins un aérogel (par rapport au poids total de la plaque plus mince (PA)), et/ou
ii) la plaque plus mince (PA) contient (par rapport au poids total de la plaque plus mince (PA)) des liants et/ou des constituants thermoplastiques à hauteur d'au plus 0,5 % en poids, de manière davantage préférée à hauteur d'au plus 0,1 % en poids, la plaque plus mince (PA) étant notamment entièrement exempte de liants et/ou de constituants thermoplastiques, et/ou
iii) la plaque de mousse thermoplastique plus mince (TS) est fabriquée à hauteur d'au moins 90 % en poids, de préférence à hauteur d'au moins 95 % en poids, de manière particulièrement préférée à hauteur de 100 % en poids, à partir d'au moins un thermoplastique (par rapport au poids total de la plaque de mousse thermoplastique plus mince (TS)), et/ou
iv) la plaque de mousse thermoplastique plus mince (TS) contient (par rapport au poids total de la plaque de mousse thermoplastique plus mince (TS)) des liants et/ou un matériau ayant un diamètre cellulaire moyen ≤ 1 000 nm, notamment des aérogels, à hauteur d'au plus 0,5 % en poids, de manière davantage préférée à hauteur d'au plus 0,1 % en poids, la plaque de mousse thermoplastique plus mince (TS) étant de manière particulièrement préférée entièrement exempte de liants et/ou de matériau ayant un diamètre cellulaire moyen ≤ 1 000 nm, notamment d'aérogel.

5. Procédé selon l'une quelconque des revendications 1 à 4, **caractérisé en ce que**
i) la plaque plus mince (PA) est fabriquée en un matériau ayant un diamètre cellulaire moyen ≤ 500 nm, de préférence ≤ 250 nm, et/ou
ii) la plaque de mousse thermoplastique plus mince (TS) présente un diamètre cellulaire moyen ≥ 10 µm, de préférence ≥ 50 µm et de manière particulièrement préférée ≥ 100 µm.

6. Procédé selon l'une quelconque des revendications 1 à 5, **caractérisé en ce que**
i) la plaque plus mince (PA) présente une conductivité thermique λ ≤ 0,025 W/(mK), de préférence ≤ 0,022 W/(mK), notamment ≤ 0,020 W/(mK), et/ou
ii) la plaque au moins bicouche présente une conductivité thermique λ ≤ 0,030 W/(mK), de préférence ≤ 0,025 W/(mK), notamment ≤ 0,020 W/(mK).

7. Procédé selon l'une quelconque des revendications 1 à 6, **caractérisé en ce qu'**une plaque tricouche est fabriquée par liaison de deux plaques de mousse thermoplastique plus minces (TS) et d'une plaque plus mince (PA), une plaque de mousse thermoplastique plus mince (TS) étant appliquée sur chaque côté opposé de la plaque plus mince (PA) pour obtenir la plaque tricouche.

8. Procédé selon la revendication 7, **caractérisé en ce qu'**une plaque tétracouche ou d'un nombre de couches plus élevé est fabriquée ; à partir de la plaque tricouche, une deuxième plaque plus mince (PA) étant appliquée sur un côté de la plaque tricouche provenant d'une plaque de mousse thermoplastique plus mince (TS), la plaque tétracouche obtenue présentant au total quatre couches alternées de plaques de mousse thermoplastique plus minces (TS) et de plaques plus minces (PA), et la première et la deuxième plaque plus mince (PA) se trouvant chacune sur un côté opposé d'une plaque de mousse thermoplastique plus mince (TS), l'application alternée d'une plaque de mousse thermoplastique plus mince (TS) supplémentaire ou d'une plaque plus mince (PA) étant éventuellement répétée au moins une fois pour obtenir des plaques à nombre de couches plus élevé.

9. Procédé selon l'une quelconque des revendications 1 à 8, **caractérisé en ce qu'**une plaque au moins bicouche est fabriquée par soudage thermique, comprenant les étapes a) à e) suivantes :
a) une plaque de mousse thermoplastique plus mince (TS) et une plaque plus mince (PA) sont orientées en parallèle l'une à l'autre à un écart a, de manière à former un espace intermédiaire,
b) au moins deux éléments chauffants sont introduits dans l'espace intermédiaire dans des plans parallèles les uns aux autres et parallèles aux deux plaques plus minces (TS) et (PA), les surfaces des deux plaques plus minces (TS) et (PA) et les éléments chauffants n'étant pas en contact mutuel,
c) les éléments chauffants sont introduits à une distance telle entre les deux plaques plus minces (TS) et (PA) qu'au moins un des éléments chauffants se trouve au moins temporairement entre les deux plaques plus minces (TS) et (PA), par rapport à chaque emplacement de la surface respective des deux plaques plus minces (TS) et (PA),
d) les éléments chauffants sont entièrement retirés de l'espace intermédiaire,
e) au moins une des deux plaques plus minces (TS) et (PA) est pressée contre la surface de l'autre plaque plus mince (TS) et (PA),
deux éléments chauffants étant de préférence introduits dans l'espace intermédiaire à l'étape b) à partir de directions opposées l'une à l'autre et/ou deux éléments chauffants étant de préférence retirés de l'espace intermédiaire à l'étape d) dans des directions opposées l'une à l'autre.

10. Procédé selon l'une quelconque des revendications 1 à 9, **caractérisé en ce que**
i) la plaque de mousse thermoplastique plus mince (TS) est une mousse particulaire ou une mousse extrudée à base d'au moins un polymère, choisi dans le groupe constitué par le polystyrène, les copolymères de polystyrène, la polyéther-sulfone, la polysulfone, le polyéthylène téréphtalate, le polyuréthane thermoplastique, les polyoléfines, les copolymères de polyoléfine et les polymères acryliques, de préférence une mousse particulaire ou une mousse extrudée à base d'au moins un polymère choisi dans le groupe constitué par le polystyrène, les copolymères de polystyrène, la polyéther-sulfone, la polysulfone, le polyuréthane thermoplastique et le polyéthylène téréphtalate, de manière préférée entre toutes une mousse particulaire ou une mousse extrudée à base d'au moins un polymère choisi dans le groupe constitué par le polystyrène, les copolymères de polystyrène, la polyéther-sulfone et le polyéthylène téréphtalate, et/ou
ii) la plaque plus mince (PA) est fabriquée en au moins un aérogel inorganique ou organique.

11. Procédé selon la revendication 10, **caractérisé en ce que**
i) l'aérogel est un aérogel inorganique à base d'oxydes métalliques, de préférence à base d'au moins un oxyde de silicium, d'aluminium ou de titane, notamment à base d'au moins un oxyde de silicium (silicate), et/ou
ii) l'aérogel est un aérogel organique à base d'isocyanates, de préférence au moins un aérogel organique, qui est fabriqué par mise en réaction des composants (a1) à (a3) suivants :
(a1) au moins un isocyanate polyfonctionnel et
(a2) au moins une amine aromatique substituée polyfonctionnelle (a2-s) selon la formule générale I 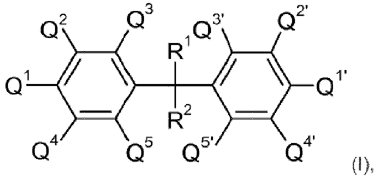 dans laquelle R¹ et R² peuvent être identiques ou différents, et sont choisis indépendamment l'un de l'autre parmi l'hydrogène et les groupes alkyle linéaires ou ramifiés de 1 à 6 atomes de carbone, et tous les substituants Q¹ à Q⁵ et Q^{1'} à Q^{5'} sont identiques ou différents, et sont choisis indépendamment les uns des autres parmi l'hydrogène, un groupe amino primaire et un groupe alkyle linéaire ou ramifié de 1 à 12 atomes de carbone, le groupe alkyle pouvant porter des groupes fonctionnels supplémentaires, à condition que
- le composé selon la formule générale I comprenne au moins deux groupes amino primaires, au moins un substituant parmi Q1, Q3 et Q5 étant un groupe amino primaire et au moins un substituant parmi Q1', Q3' et Q5' étant un groupe amino primaire, et
- Q2, Q4, Q2' et Q4' soient choisis de telle sorte que le composé selon la formule générale I comprenne au moins un groupe alkyle linéaire ou ramifié, qui peut porter des groupes fonctionnels supplémentaires, de 1 à 12 atomes de carbone en position α par rapport à au moins un groupe amino primaire relié au noyau aromatique,
et éventuellement au moins une amine aromatique polyfonctionnelle supplémentaire (a2-u), qui est différente des amines (a2-s) selon la formule générale I, et
(a3) de l'eau,
la mise en réaction ayant de préférence lieu en présence d'un solvant (C) et éventuellement en présence d'au moins un catalyseur (a4).

12. Procédé selon l'une quelconque des revendications 1 à 11, **caractérisé en ce que** la liaison a lieu par soudage thermique, et
i) un joint de soudure d'une épaisseur de 30 à 200 µm, de préférence de 50 à 150 µm, de manière davantage préférée de 70 à 130 µm, notamment de 80 à 100 µm, est formé et/ou
ii) deux éléments chauffants sont utilisés et/ou les éléments chauffants sont des plaques chauffantes, de préférence des émetteurs IR ayant une température de surface de 200 à 1 000 °C, notamment de 300 à 700 °C, et/ou
iii) les éléments chauffants sont déplacés aux étapes b) et d) selon la revendication 9 à une vitesse de 0,1 à 5 m/s, de préférence de 0,3 à 3 m/s, et/ou
iv) à l'étape b) selon la revendication 9, deux éléments chauffants sont introduits dans l'espace intermédiaire à partir de directions opposées l'une à l'autre et, à l'étape d), deux éléments chauffants sont retirés de l'espace intermédiaire dans des directions opposées l'une à l'autre, et/ou
v) la durée totale des étapes b) à e) selon la revendication 9 est d'au plus 20 secondes, de préférence d'au plus 10 secondes, notamment d'au plus 5 secondes.

13. Procédé selon l'une quelconque des revendications 1 à 12, **caractérisé en ce que**
i) ladite au moins une plaque de mousse thermoplastique plus mince (TS) présente une longueur (direction x) de 500 à 2 800 mm, de préférence de 1 000 à 1 500 mm, une largeur (direction y) de 200 à 1 250 mm, de préférence de 500 à 900 mm, et une épaisseur (direction z) de 2 à 100 mm, de préférence de 5 à 50 mm, et/ou
ii) ladite au moins une plaque plus mince (PA) présente une longueur (direction x) de 500 à 2 800 mm, de préférence de 1 000 à 1 500 mm, une largeur (direction y) de 200 à 1 250 mm, de préférence de 500 à 900 mm, et une épaisseur (direction z) de 10 à 200 mm, de préférence de 20 à 100 mm, et/ou
iii) chaque plaque de mousse thermoplastique plus mince (TS) et chaque plaque plus mince (PA) présentent des valeurs identiques pour la longueur (direction x) et la largeur (direction y), et/ou
iv) ladite au moins une plaque de mousse thermoplastique plus mince (TS) et ladite au moins une plaque plus mince (PA) sont reliées l'une avec l'autre à chaque fois par un des deux côtés de plus grande surface (plan xy) de la plaque correspondante, les plaques à relier l'une avec l'autre présentant de manière particulièrement préférée des dimensions de longueur et de largeur identiques.

14. Plaque au moins bicouche pouvant être obtenue par un procédé selon l'une quelconque des revendications 1 à 13.

15. Utilisation d'une plaque au moins bicouche selon la revendication 14 pour l'isolation thermique.
